# EUROPÄISCHE PATENTSCHRIFT

(11) **EP 3 367 464 B1**
(45) Veröffentlichungstag und Bekanntmachung des Hinweises auf die Patenterteilung: **23.10.2019**
(21) Anmeldenummer: 18157659.6
(22) Anmeldetag: 20.02.2018
(51) Int. Cl.: H01M 2/10, H01M 2/30

(54) **ENERGIESPEICHERMODUL UND ELEKTRISCHES GERÄT**
ENERGY STORAGE MODULE AND ELECTRICAL DEVICE
MODULE D'ACCUMULATEUR D'ÉNERGIE ET APPAREIL ÉLÉCTRIQUE

(30) Priorität: 24.02.2017 DE 102017103851
(43) Veröffentlichungstag der Anmeldung: 29.08.2018
(73) Patentinhaber: Festool GmbH, 73240 Wendlingen am Neckar (DE)
(72) Erfinder: Philipp, Eisenmann, 72669 Unterensingen (DE); Albrecht, Hans-Peter, 73240 Wendlingen (DE); Tulodziecki, Stefan, 73765 Neuhausen (DE)
(74) Vertreter: Patentanwälte Bregenzer und Reule Partnerschaftsgesellschaft mbB

(56) Entgegenhaltungen:
- US-A1- 2002 089 306

## Beschreibung

Die Erfindung betrifft ein System mit einem Energiespeichermodul zur Verwendung mit einem elektrischen Gerät in Gestalt einer elektrischen Hand-Werkzeugmaschine oder eines Sauggeräts gemäß dem Oberbegriff des Anspruchs 1.

Ein derartiges System ist in US 2002/0089306 A1 beschrieben.

Elektrische Energiespeichermodule in Gestalt beispielsweise sogenannter Akkupacks sind zum Betrieb von elektrischen Handwerkzeugmaschinen, Staubsaugern oder dergleichen allgemein bekannt. In Regel werden die Energiespeichermodule als relativ kompakte, quaderförmige Akkupacks bereitgestellt, die an einer Seite einen Befestigungsbereich aufweisen, der außen an das Gerätegehäuse der Handwerkzeugmaschine oder des Sauggeräts angesteckt werden kann. Das Energiespeichermodul steht dann seitlich vor das Gerätegehäuse vor. Beispielsweise ist es unten an einem Handgriff eines Schraubgeräts, seitlich an einem Motorgehäuse einer Säge oder dergleichen angeordnet.

Die bekannten Konstruktionen sind sperrig und eignen sich insbesondere für kompakte, kleinere elektrische Geräte, wie zum Beispiel Schleifgeräte, Schraubgeräte oder dergleichen, nur in eingeschränktem Maße. Darüber hinaus ist die elektrische Kontaktierung nicht unproblematisch.

Es ist daher die Aufgabe der vorliegenden Erfindung, ein demgegenüber verbessertes System bereitzustellen.

Zur Lösung der Aufgabe ist ein System gemäß der technischen Lehre des Anspruchs 1 vorgesehen.

Bei einem elektrischen Gerät, das einen Bestandteil des Systems bildet, ist vorgesehen, dass die Energiespeicherschnittstelle als eine Steckaufnahme zum Einstecken eines Steckvorsprungs der Geräteschnittstelle des Energiespeichermoduls ausgestaltet ist, und dass die Gegenkontakte an einer an einem sich entlang der Steckachse erstreckenden Seitenwandabschnitt der Steckaufnahme angeordnet sind und/oder das Gerätegehäuse im Bereich der Steckaufnahme eine insbesondere zum Umgreifen geeignete Taillierung aufweist. Die Steck-Formschlusskonturen sind vorteilhaft an einem Befestigungsbereich des Modulgehäuses des Energiespeichermoduls angeordnet. Das Energiespeichermodul weist vorteilhaft mindestens einen in dem Modulgehäuse aufgenommenen Energiespeicher, insbesondere eine Anordnung mit mindestens einer wiederaufladbaren elektrischen Speicherzelle, zur Bereitstellung elektrischer Energie an den Kontakten auf.

Die Hand-Werkzeugmaschine ist beispielsweise eine Schraubmaschine, Schleifmaschine, Poliermaschine, Sägemaschine, Bohrmaschine oder dergleichen. Das Energiespeichermodul ist beispielsweise ein sogenannter Akkupack.

Es ist ein Grundgedanke der vorliegenden Erfindung, dass das elektrische Gerät beispielsweise ein Schleifgerät, eine Bohrmaschine oder dergleichen, eine Steckaufnahme für den Steckvorsprung des Energiespeichermoduls aufweist, wobei die Kontaktierung nicht oder nicht nur stirnseitig erfolgt, d.h. an einem freien, im Steckrichtung vorderen Stirnseitenbereich des Energiespeichermoduls, sondern seitlich an den Seitenwänden. Dadurch kann beispielsweise ein besonders günstiger und guter Kontakt zwischen dem Energiespeichermodul und dem elektrischen Gerät bereitgestellt werden. Es ist möglich, dass die seitlichen Kontakte unbelastet vom Steckvorgang optimal in Lage zu den Gegenkontakten gebracht werden, selbst wenn der Steckvorsprung nicht in vollständiger Tiefe in die Steckaufnahme eingreift. Bei stirnseitigen Kontakten, insbesondere Flächenkontakten, eines Energiespeichermoduls ist ein vollständiges Einstecken in die Steckaufnahme wichtiger, damit sie in Kontakt mit Gegenkontakten der Energiespeicherschnittstelle des elektrischen Geräts kommen können.

Der Seitenwandabschnitt des Steckvorsprungs, an dem die elektrischen Kontakte angeordnet sind, verläuft vorzugsweise parallel oder im Wesentlichen parallel zu der Steckachse. Der Seitenwandabschnitt kann schräg zur Steckachse in einem flachen Winkel, beispielsweise bis maximal zwischen 2° und 5°, geneigt sein, was ein Einstecken in die Steckaufnahme der Energiespeicherschnittstelle des elektrischen Geräts erleichtert.

Der Seitenwandabschnitt, an dem die elektrischen Kontakte angeordnet sind, kann mehrere Teil-Seitenwandabschnitte aufweisen, beispielsweise gestufte Teil-Seitenwandabschnitte. Die Teil-Seitenwandabschnitte verlaufen vorzugsweise ebenfalls parallel zur Steckachse oder mit einer flachen Schrägneigung, beispielsweise ebenfalls bis maximal zwischen 2° und 5°.

Eine bevorzugte Ausführungsform der Erfindung sieht vor, dass der Steckvorsprung eine Stützwand zum Abstützen an einer Stützkontur, insbesondere ebenfalls einer Stützwand, der Steckaufnahme des elektrischen Geräts aufweist. Die Stützwand und die elektrischen Kontakte bzw. der die elektrischen Kontakte aufweisende Seitenwandabschnitt sind an einander entgegengesetzten Seiten des Steckvorsprungs angeordnet. Somit ist also einerseits eine Stützwand, andererseits der Seitenwandabschnitt mit dem Kontakten vorgesehen, die sich jeweils an entsprechenden Gegenkonturen der Steckaufnahme abstützen können. Beispielsweise ist die Stützwand des Steckvorsprungs als eine Planfläche ausgestaltet oder weist eine Planfläche auf. Dadurch kann sie besonders günstig an entsprechenden gegenhaltenden Flächen bzw. schützenden Flächen der Steckaufnahme abgestützt sein.

Vorteilhaft ist es, wenn die elektrischen Kontakte oder sämtliche elektrische Kontakte oder des Energiespeichermoduls an einer einzigen Seitenwand oder ausschließlich an einem einzigen Seitenwandabschnitt des Steckvorsprungs angeordnet sind. Zu dem die elektrischen Kontakte aufweisenden Seitenwandabschnitt des Steckvorsprungs winkelige Seitenwände des Steckvorsprungs und/oder entgegengesetzte Seitenwände und/oder davon abgewandte Seitenwände des Steckvorsprungs weisen zweckmäßigerweise keine elektrischen Kontakte oder Kontaktflächen auf.

Bevorzugt ist weiterhin, dass die elektrischen Kontakte in mindestens zwei Ebenen angeordnet sind, die unterschiedliche Querabstände zu der Steckachse aufweisen. Weiterhin können die elektrischen Kontakte stufig angeordnet sein. Somit können beispielsweise im Querabstand zu der Steckachse erste und zweite Kontakte angeordnet sein. Die Kontakte können in Bezug auf die Steckachse die gleiche Position haben, d.h. nicht relativ zueinander bezüglich der Steckachse versetzt sein. Es ist aber auch möglich, dass die Kontakte in Bezug auf die Steckachse hintereinander angeordnet sind.

In einer oder beiden der Ebenen, die unterschiedliche Querabstände zu der Steckachse aufweisen, kann nur ein elektrischer Kontakt oder können zwei oder weitere elektrische Kontakte vorgesehen sein. So ist es beispielsweise möglich, dass in der einen Ebene elektrische Kontakte für eine Busverbindung zwischen dem elektrischen Gerät und dem Energiespeichermodul oder eine sonstige Datenverbindung zwischen den beiden Komponenten vorgesehen sind, während in der anderen Ebene elektrische Kontakte zur Stromübertragung bzw. Energieübertragung vom Energiespeichermodul zum elektrischen Gerät vorgesehen sind.

Ohnehin ist es möglich, dass das Energiespeichermodul mindestens zwei in Bezug auf die Steckachse hintereinander angeordnete Kontakte aufweist. Diese können in derselben Ebene, d.h. im selben Querabstand zur Steckachse angeordnet sein, aber auch unterschiedliche Querabstände aufweisen.

Insbesondere ist es aber vorteilhaft, wenn Kontakte in zwei Ebenen mit unterschiedlichem Querabstand zur Steckachse vorgesehen sind und diese Kontakte in Bezug auf eine Steckrichtung, entlang derer der Steckvorsprung in die Steckaufnahme einsteckbar ist, hintereinander angeordnet sind.

Durch die Anordnung von Kontakten in unterschiedlichen Ebenen bzw. in unterschiedlichem Querabstand zur Steckachse und/oder in Bezug auf Steckachse hintereinander ermöglicht eine besonders günstige elektrische Isolation. Weiterhin können mehrere Kontaktbereiche genutzt werden, so dass eine Vielzahl von Kontakten möglich sind, die sich gegenseitig nicht oder nur unwesentlich beeinflussen. Insbesondere sind elektromagnetisch günstige Verhältnisse auf diesem Wege herstellbar.

An dem Steckvorsprung sind zweckmäßigerweise sich entlang der Steckachse oder parallel zur Steckachse erstreckende Führungskonturen zur Führung an Gegen-Führungskonturen der Energiespeicherschnittstelle des elektrischen Gerätes angeordnet. Bei den Führungskonturen kann es sich beispielsweise um Führungsrippen, Stützrippen oder dergleichen handeln.

Bei den an sich eigenständigen Gedanken stellt es dar, dass der Steckvorsprung, an welchem die Steckkontakte angeordnet sind, besonders schmal oder kompakt ausgestaltet ist. Somit stellt die nachfolgende Maßnahme einerseits eine Verbesserung der Erfindung dar, andererseits auch eine an sich eigenständige Erfindung. Bevorzugt ist es auch bei dieser Ausführungsform, dass in dem Steckvorsprung keine Komponente, beispielsweise keine elektrische Speicherzelle der Energiespeicheranordnung angeordnet ist. Dadurch ist der Steckvorsprung besonders kompakt. Diese Konstruktion funktioniert sowohl bei einem Steckvorsprung, der an dem Seitenwandabschnitt seine Kontakte aufweist, als auch bei einem Steckvorsprung, der abweichend von der in der Zeichnung dargestellten Ausführungsform beispielsweise stirnseitige Kontakte zur Kontaktierung mit Gegenkontakten der Energiespeicherschnittstelle des elektrischen Geräts aufweist.

Eine bevorzugte Ausführungsform der Erfindung sieht vor, dass der Steckvorsprung als eine Steckzunge ausgestaltet ist. Der Steckvorsprung baut also besonders schmal, kann aber eine gewisse Querbreite quer zur Steckachse aufweisen. Eine Höhe des Steckvorsprungs hingegen ist vorteilhaft deutlich kleiner als eine Breite. Der Steckvorsprung oder eine diesen Umhüllende hat also beispielsweise einen etwa flach rechteckigen Querschnitt, wobei dieser Querschnitt selbstverständlich Führungskonturen, Führungsaufnahmen, Aussparungen oder dergleichen aufweisen kann. Mithin ist also die Umhüllung des Querschnitts vorzugsweise etwa flach rechteckig oder in der Gestalt eines flachen Trapezes ausgestaltet.

Der Steckvorsprung weist zweckmäßigerweise eine kleinere von der Steckachse durchsetzte Querschnittsfläche als ein Abschnitt des Energiespeichermoduls auf, vor welchen der Steckvorsprung vorsteht. In diesem Abschnitt des Energiespeichermoduls sind beispielsweise eine oder mehrere Speicherzellen, beispielsweise 1,5 V oder 1,3 V Speicherzellen angeordnet.

An dieser Stelle sei noch allgemein erwähnt, dass das Energiespeichermodul vorzugsweise eine Anordnung mit mehreren Energie-Speicherzellen aufweist. Die Speicherzellen sind beispielsweise mit paralleler Längserstreckung aufeinander geschichtet. Beispielsweise sind Stapel von Speicherzellen vorteilhaft.

Der Querschnitt des Steckvorsprungs ist vorzugsweise nur etwa halb so groß wie der Querschnitt des Abschnitts des Modulgehäuses, in welchem die Speicherzellen oder allgemeiner gesagt der Energiespeicher angeordnet ist.

Vorteilhaft ist ferner, wenn mindestens ein Kontakt, vorzugsweise alle Kontakte, der elektrischen Kontakte des Energiespeichermoduls parallel zur Steckachse erstrecken. Die Kontaktflächen der Kontakte liegen vorzugsweise in zu der Steckachse parallelen Ebenen.

Die Gegenkontakte des elektrischen Geräts sind vorzugsweise sinngemäß ausgestaltet, d. h. dass sich mindestens ein Gegenkontakt, vorzugsweise alle Gegenkontakte des elektrischen Geräts, parallel zur Steckachse erstrecken und/oder ihn zu der Steckachse parallelen Ebenen angeordnet Kontaktflächen aufweisen.

Die Kontakte und/oder die Gegenkontakte sind vorzugsweise als Messerkontakte ausgeführt.

Weiterhin ist es vorteilhaft, dass das Energiespeichermodul mindestens eine Hintergreif-Kontur zum Hintergreifen durch Eingriffkontur des elektrischen Geräts oder eines Ladegeräts für das Energiespeichermodul aufweist. Die Hintergreif-Kontur ist vorzugsweise langgestreckt. Weiterhin erstreckt sich die Hintergreif-Kontur zweckmäßigerweise parallel zur Steckachse. Die Hintergreif-Kontur ist zweckmäßigerweise zumindest am Steckvorsprung angeordnet. Sie kann sich aber auch an einem vom Steckvorsprung entfernteren Abschnitt des Energiespeichermoduls bzw. des Modulgehäuses befinden. Die Eingriffkontur des Ladegeräts oder des elektrischen Geräts umgreift oder hintergreift die Hintergreif-Kontur, so dass beispielsweise die Kontakte des Energiespeichermoduls in Richtung der Gegenkontakte des Ladegeräts oder des elektrischen Geräts quer zur Steckachse abgestützt sind. Die Hintergreif-Kontur kann beispielsweise als ein Führungsvorsprung ausgestaltet sein, der an den Schmalseiten des Steckvorsprungs des Modulgehäuses des Energiespeichermoduls angeordnet ist.

Insbesondere ist es vorteilhaft, wenn die oder eine Hintergreif-Kontur als eine Längsrippe ausgestaltet ist, die quer zur Steckachse vor das Modulgehäuse, insbesondere den Steckvorsprung, vorsteht. Möglich sind selbstverständlich an einer Längsseite auch mehrere derartige Hintergreif-Konturen. Möglich ist weiterhin, dass an dem Energiespeichermodul Hintergreif-Konturen sowohl für das Ladegerät und andere Hintergreif-Konturen für das elektrische Gerät, welches durch das Energiespeichermodul mit Strom oder Energie versorgt wird, vorgesehen sind. So können beispielsweise an einer Schmalseite oder einer sonstigen Seite des Steckvorsprungs oder des Modulgehäuses zwei Längsrippen oder Hintergreif-Konturen vorgesehen sein, von denen eine für den Halt am Ladegerät und die andere für einen Halt oder eine Führung in der Steckaufnahme des elektrischen Geräts vorgesehen sind. Ferner kann die mindestens eine Hintergreif-Kontur als eine Längsausnehmung ausgestaltet sein, die quer zur Steckachse vor das Modulgehäuse, insbesondere den Steckvorsprung, vorsteht oder sich quer zur Steckachse in das Modulgehäuse, zum Beispiel den Steckvorsprung, hinein erstreckt.

Bevorzugt ist weiterhin eine Art Verkeilung oder Verrastung des Energiespeichermoduls am Gerätegehäuse des elektrischen Geräts. An dem Energiespeichermodul ist zweckmäßigerweise mindestens eine quer zur Steckachse schräg geneigte Einführschräge zum Einführen in die Steckaufnahme vorgesehen. Somit ist das Einführen in die Steckaufnahme erleichtert.

Ferner ist es vorteilhaft, wenn am Energiespeichermodul mindestens eine quer zur Steckachse schräg geneigte Schrägfläche, beispielsweise eine Keilschräge, zur Abstützung an einer Stützkontur der Steckaufnahme quer zu der Steckachse vorhanden ist. Die Abstützung erfolgt zweckmäßigerweise keilartig. Bevorzugt sind an einander entgegengesetzten Seiten des Modulgehäuses jeweils eine oder mehrere Keilschrägen vorhanden. Die mindestens eine Keilschräge ist vorteilhaft an einem vom freien Ende des Steckvorsprungs entfernten Fußbereich des Steckvorsprungs angeordnet. Zweckmäßigerweise ist die mindestens eine Keilschräge so angeordnet, dass die Verkeilung sozusagen am Ende des Steckweges, nämlich dann, wenn das Energiespeichermodul vollständig in die Steckaufnahme des elektrischen Geräts eingesteckt ist, wirksam wird,

Weiterhin sieht eine vorteilhafte Konstruktion vor, dass vorn am Steckvorsprung Einführschrägen, also mindestens eine Einführschräge, vorhanden sind, während bezüglich der Steckachse in einem Längsabstand dazu eine oder mehrere Schrägflächen, insbesondere Keilschrägen vorhanden sind. Somit kann der freie Endbereich, also der Steckvorsprung, günstig in die Steckaufnahme eingeführt werden.

Weiterhin vorteilhaft ist eine Verrastung des Energiespeichermoduls mit dem elektrischen Gerät. Beispielsweise ist ein Rasthaken oder ein sonstiger Rastvorsprung als Energiespeichermodul vorgesehen, der mit einer Rastgegenkontur des elektrischen Geräts, beispielsweise im Bereich der Steckaufnahme, verrastet. Der Rastvorsprung oder Rasthaken ist vorzugsweise federbelastet.

Es kann aber auch ein Rastvorsprung am elektrischen Gerät zum Verrasten mit einer Rastgegenkontur des Energiespeichermoduls vorgesehen sein. Es ist z.B. möglich, dass das elektrische Gerät mindestens eine federnde oder angefederte Raste aufweist, die mit dem Energiespeichermodul verrasten kann.

Ein Betätigungselement für die Rastanordnung des Energiespeichermoduls ist zweckmäßigerweise an einem vom Steckvorsprung abgewandten Endbereich des Modulgehäuses vorgesehen. Dieser Endbereich steht zweckmäßigerweise vor die Steckaufnahme bzw. das elektrische Gerät und dessen Gerätegehäuse vor.

Zweckmäßig ist weiterhin, wenn das Energiespeichermodul an einer Stirnseite oder Stirnfläche des Steckvorsprungs keinen elektrischen Kontakt aufweist. Ohne weiteres sind dort aber elektrische Kontakte auch möglich.

Die elektrischen Kontakte sind in Bezug auf eine Steckrichtung, entlang derer das Energiespeichermodul in die Steckaufnahme des elektrischen Geräts einsteckbar ist, vorteilhaft hinter einer in Steckrichtung vorn liegenden Stirnfläche oder Stirnseite des Steckvorsprungs angeordnet. Die Stirnfläche oder Stirnseite des Steckvorsprungs ist vorteilhaft ohne Kontakte, während die elektrischen Kontakte etwas dahinter angeordnet sind. Somit sind die elektrischen Kontakte des Energiespeichermoduls in Bezug auf die Steckachse oder Steckrichtung geschützt. Wenn also das Energiespeichermodul beispielsweise mit seiner Stirnseite auf eine Widerstandsfläche stößt, beispielsweise zu Boden fällt oder dergleichen, werden dadurch die Kontakte nicht beschädigt oder beeinträchtigt.

Vorteilhaft ist in Bezug auf die Steckachse ein Längsabstand zwischen einer Stirnseite oder einer Stirnwand oder Stirnfläche des Steckvorsprungs und den elektrischen Kontakten vorhanden.

Vorteilhaft erstreckt sich zwischen einer Stirnfläche oder Stirnseite des Steckvorsprungs und den elektrischen Kontakten mindestens ein isolierender Wandabschnitt. Beispielsweise erstreckt sich ein Teil des Seitenwandabschnitts, an dem die elektrischen Kontakte angeordnet sind, zwischen der Stirnseite oder Stirnwand oder Stirnfläche des Steckvorsprungs und den elektrischen Kontakten.

Die Erfindung sieht eine Kompatibilität des Energiespeichermoduls mit anderen Energiespeichermodulen, die sozusagen konventionelle Energiespeichermodule sind, vor.

Das Energiespeichermodul bildet also ein Energiespeichermodul eines ersten Typs, hat aber eine Geräteschnittstelle, die einer Geräteschnittstelle eines Energiespeichermoduls eines zweiten Typs entspricht. In Bezug auf die Geräteschnittstelle, die insbesondere für eine Ladetechnologie wesentlich ist, haben also die Energiespeichermodule des ersten Typs und des zweiten Typs keine oder nur unwesentliche Unterschiede. Die Geräteschnittstellen der beiden verschiedenen Energiespeichermodul-Typen sind also in Bezug auf eine Steckmechanik und Kontaktierung identisch. Dies bedeutet allerdings nicht, dass sämtliche Kontakte gleich sein müssen. Es ist lediglich notwendig, dass für eine Systemkompatibilität notwendige Kontakte gleich sind. So müssen beispielsweise Kontakte für eine Versorgungsspannung an derselben Stelle angeordnet sein. Auch Kontakte für eine Busverbindung oder sonstige Datenverbindung zwischen Ladegerät und einem jeweiligen Energiespeichermodul sollten an derselben Stelle sein. Es ist aber möglich, dass beispielsweise das Energiespeichermodul des ersten Typs einen oder mehrere weitere Kontakte aufweist, die das Energiespeichermodul des zweiten Typs nicht hat, und/oder dass das Energiespeichermodul des ersten Typs Kontakte nicht aufweist, die jedoch beim Energiespeichermodul des zweiten Typs vorhanden sind.

Das Energiespeichermodul des zweiten Typs hat ein von dem Energiespeichermodul des ersten Typs unterschiedliches Modulgehäuse, insbesondere ein kubisches Modulgehäuse mit einer Seitenfläche, an der die Geräteschnittstelle angeordnet ist. Das Energiespeichermodul des zweiten Typs ist mit dieser Seitenfläche bzw. die Geräteschnittstelle an ein elektrisches Gerät seitlich ansteckbar, wobei im angesteckten oder montierten Zustand das Modulgehäuse vor ein Gerätegehäuse des elektrischen Geräts mit seinem von der Seitenfläche angewandten Abschnitt vorsteht. Beispielsweise kann eine Art würfelförmige Konfiguration vorgesehen sein, bei der das sozusagen konventionelle Energiespeichermodul außerhalb des Gerätegehäuses des elektrischen Geräts angeordnet ist. Der ganze oder wesentliche Teil des Volumens des Energiespeichermoduls des zweiten Typs, insbesondere des Modulgehäuses des Energiespeichermoduls des zweiten Typs, vorzugsweise mindestens 80 % des Volumens oder mindestens 90 % des Volumens des Energiespeichermoduls des zweiten Typs, ist vorteilhaft außerhalb des Gerätegehäuses des elektrischen Geräts angeordnet, wenn das Energiespeichermodul des zweiten Typs an dem elektrischen Gerät montiert ist.

### Der Vorteil dieser Konstruktion ergibt sich insbesondere nachfolgend:

Die Energiespeichermodule bilden Bestandteile eines Systems, welches mindestens ein Energiespeichermodul des ersten Typs und ein Energiespeichermodul des zweiten Typs aufweist. Das System kann auch ergänzend zu dem Energiespeichermodul des zweiten Typs ein Ladegerät zum Aufladen des Energiespeichermoduls des ersten Typs und des zweiten Typs aufweisen. Somit kann ein und dasselbe Ladegerät für beide Energiespeichermodule-Typen verwendet werden. Das Ladegerät weist eine Ladeschnittstelle auf, an welche die Geräteschnittstelle des Energiespeichermoduls des ersten Typs und des Energiespeichermoduls des zweiten Typs passen. So sind beispielsweise die bereits erwähnten Führungskonturen oder Hintergreif-Konturen bei den Geräteschnittstellen des Energiespeichermoduls des ersten Typs und des zweiten Typs vorhanden. Diese müssen nicht absolut identisch sein, d.h. beispielsweise in Bezug auf die Steckachse dieselbe Längslänge aufweisen, jedoch geeignet sein, dass Eingriffkonturen des Ladegeräts jeweils in Eingriff mit den Hintergreif-Konturen gelangen können.

Jedes Energiespeichermodul des Systems weist integral einen Energiespeicher, insbesondere eine Anordnung mit mindestens einer wiederaufladbaren elektrischen Speicherzelle, zur Bereitstellung elektrischer Energie auf. Mithin können also beide Typen (oder weitere Typen) der Energiespeichermodule jeweils zur Energieversorgung der Hand-Werkzeugmaschine oder des Sauggeräts, jedenfalls des elektrischen Geräts, verwendet werden.

Zwischen den Geräteschnittstellen der Energiespeichermodule des ersten Typs und des zweiten Typs und den jeweiligen Energiespeichern, insbesondere den Anordnungen mit mindestens einer wiederaufladbaren elektrischen Speicherzelle, des jeweiligen Energiespeichermoduls sind vorzugsweise keine lösbaren elektrischen Kontakte und/oder Steckkontakte und/oder, insbesondere ausschließlich, feste oder bei einem typischen Gebrauch des Energiespeichermoduls an dem elektrischen Gerät nicht lösbare oder gelöste Leitungsverbindungen vorhanden.

Vorzugsweise ist der Energiespeicher mit der jeweiligen Geräteschnittstelle dauerhaft verbunden und nicht beim Entfernen des Energiespeichers von einem elektrischen Gerät von der Geräteschnittstelle entfernbar.

Vorteilhaft sind die elektrischen Kontakte der jeweiligen Geräteschnittstellen der Energiespeichermodule ohne ein Öffnen des jeweiligen Modulgehäuses des jeweiligen Energiespeichermoduls nicht von den Energiespeichern, insbesondere den jeweiligen Anordnungen mit mindestens einer wiederaufladbaren elektrischen Speicherzelle, des jeweiligen Energiespeichermoduls trennbar.

Die jeweiligen Geräteschnittstellen des Energiespeichermoduls des ersten Typs und des Energiespeichermoduls des zweiten Typs sind integral und/oder einstückig an den Modulgehäusen, in denen die Anordnungen mit mindestens einer wiederaufladbaren elektrischen Speicherzelle zur Bereitstellung elektrischer Energie angeordnet sind, vorgesehen. Mithin sind also die Geräteschnittstellen nicht an Adaptern, die mit den jeweiligen Modulgehäusen verbindbar sind, sondern direkt an den Modulgehäusen angeordnet.

Bei dem elektrischen Gerät weist die Taillierung im Bereich der Steckaufnahme einen Vorteil dar. Dort ist das Gerätegehäuse beispielsweise etwas schlanker oder dünner, weist also einen kleineren Querschnitt auf, so dass es bequem ergriffen werden kann. Die Taillierung kann von einem Bediener beispielsweise umgriffen werden.

Das Gerätegehäuse weist zweckmäßigerweise im Bereich einer Einstecköffnung der Steckaufnahme eine Partie mit einem größeren Außenumfang zur Aufnahme einer Partie des Energiespeichermoduls, die den Energiespeicher, beispielsweise mehrere Speicherzellen oder mindestens eine Speicherzelle, aufgenommen ist, sowie eine Partie mit einem kleineren Außenumfang zur Aufnahme des Steckvorsprungs des Energiespeichermoduls auf. Mithin ist also das Gerätegehäuse im Bereich des Steckvorsprungs etwas schlanker. Die Partie mit größerem Außenumfang kann sich beispielsweise als Auflage für eine Handfläche, insbesondere eine Handballenfläche, des Bedieners anbieten.

Das elektrische Gerät weist beispielsweise einen Antriebsmotor zum Antreiben eines Arbeitswerkzeugs, beispielsweise eine Schleifwerkzeugs, Polierwerkzeug, eines Sägewerkzeugs oder dergleichen auf. Der Antriebsmotor kann aber auch ein Saugaggregat antreiben, wenn das elektrische Gerät als Sauggerät ausgestaltet ist.

Ein bevorzugtes Konzept sieht vor, dass die Gegenkontakte im Bereich der Taillierung des Gerätegehäuses angeordnet sind. Besonders bevorzugt ist es, wenn ausschließlich im Bereich dieser Taillierung die Gegenkontakte angeordnet sind. Weiterhin ist es möglich, dass die Gegenkontakte oberhalb eines Antriebsmotors oder neben einem Antriebsmotor des Geräts angeordnet sind. Jedenfalls ist es vorteilhaft, wenn oberhalb des Antriebsmotors oder neben dem Antriebsmotor oder im Bereich einer Leistungselektronik des elektrischen Geräts nur der Steckvorsprung des Energiespeichermoduls angeordnet ist. Dort befinden sich zweckmäßigerweise im montierten Zustand des Energiespeichermoduls keine wiederaufladbaren Speicherzellen. Die Gegenkontakte des elektrischen Geräts oder mindestens ein Gegenkontakt des elektrischen Geräts und/oder eine den Steckvorsprung des Energiespeichermoduls aufnehmende Aufnahmepartie des elektrischen Geräts befinden beziehungsweise befindet sich zweckmäßigerweise etwa in einer Ebene, in der sich auch eine Längsachse oder Motorwelle des Antriebsmotors befindet.

Nachfolgend wird ein Ausführungsbeispiel der Erfindung anhand der Zeichnung erläutert. Es zeigen:
- Figur 1: eine perspektivische Schrägansicht eines elektrischen Geräts sowie eines Energiespeichermoduls im noch nicht an einander montierten Zustand,
- Figur 2: das elektrische Gerät mit montiertem Energiespeichermodul,
- Figur 3: ein Ladegerät für das Energiespeichermodul in perspektivischer Schrägansicht von vorn,
- Figur 4: das Ladegerät gemäß Figur 3, jedoch mit daran angeordnetem Energiespeichermodul,

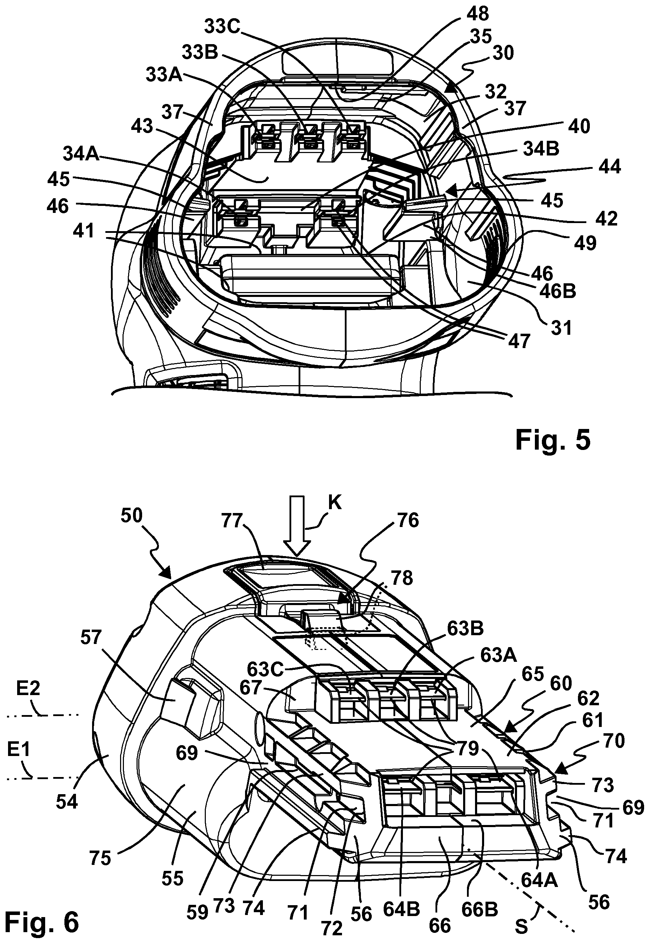

- Figur 5: eine Ansicht von hinten auf das elektrische Gerät gemäß Figur 1, so dass eine Steckaufnahme einschließlich der Energiespeicherschnittstelle sichtbar ist,
- Figur 6: eine perspektivische Schrägansicht von oben auf das Energiespeichermodul gemäß Figur 1,
- Figur 7: einen Schnitt durch einen oberen Teil des elektrischen Geräts gemäß Figur 2 mit dem Energiespeichermodul etwa entlang einer Schnittlinie A-A in Figur 2,
- Figur 8: einen Schnitt durch die Anordnung gemäß Figur 4 etwa entlang einer durch eine Linie B-B in Figur 4 angedeutete Schnittebene,
- Figur 9: eine perspektivische Schrägansicht von unten auf ein elektrisches Gerät eines zweiten Typs für ein Energiespeichermodul eines zweiten Typs,
- Figur 10: eine vergrößerte Darstellung eines unteren Bereichs des elektrischen Geräts gemäß Figur 9,
- Figur 11: ein Energiespeichermodul eines zweiten Typs zur Anordnung an dem elektrischen Gerät gemäß Figur 9, 10, und
- Figur 12: eine schematische Darstellung eines Sauggeräts.

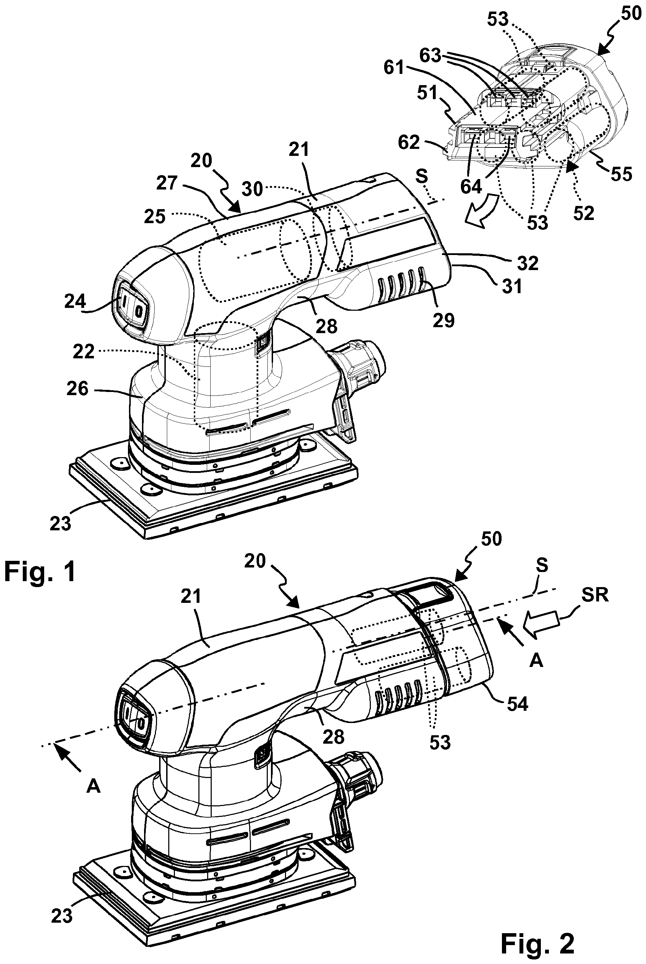

Ein elektrisches Gerät 20 in Gestalt einer elektrischen Handwerkzeugmaschine, ist in den Figuren 1 und 2 perspektivisch schräg dargestellt. Im Gerätegehäuse 21 ist beispielsweise ein elektrischer Antriebsmotor 22 angeordnet, der direkt oder über ein Getriebe ein Werkzeug 23, beispielsweise ein Fräswerkzeug, Schneidwerkzeug oder vorliegend ein Schleifwerkzeug, antreibt. Der Antriebsmotor 22 ist durch eine Steuerung 25 ansteuerbar, die beispielsweise leistungselektronische Komponente oder dergleichen umfasst. Die Steuerung 25 kann beispielsweise eine Phasenanschnittssteuerung oder eine Bestromungseinrichtung aufweisen. Der Antriebsmotor 22 ist vorzugsweise ein elektronisch kommutierter Motor.

Der Antriebsmotor 22 ist beispielsweise in einer Antriebspartie 26 des Gerätegehäuses 21 angeordnet, an dem sich auch das Werkzeug 23 oder eine Werkzeugaufnahme für das Werkzeug 23 befindet. Die Antriebspartie 26 steht vor eine Handgriffpartie 27 des Gerätegehäuses 21 vor. Die Handgriffpartie 27 kann von einem Bediener bequem ergriffen und umgriffen werden, was später noch deutlicher wird. An einem Kopfabschnitt der Handgriffpartie 27 ist der Schalter 24 angeordnet. An einer entgegengesetzten Seite der Handgriffpartie 27 ist eine Energiespeicherschnittstelle 30 für ein Energiespeichermodul 50 vorgesehen. Die Energiespeicherschnittstelle 30 umfasst eine Steckaufnahme 31, in die ein Steckvorsprung 61 einer Geräteschnittstelle 60 des Energiespeichermoduls 50 einsteckbar ist.

Das Energiespeichermodul 50 weist ein Modulgehäuse 51 auf, in welchem ein Energiespeicher 52 mit mehreren Speicherzellen 53, beispielsweise Lithium-lonen-Speicherzellen, Nickel-Cadimum-Speicherzellen oder dergleichen, angeordnet sind. Darauf kommt es im Detail nicht an. Mithin handelt es sich bei den Speicherzellen 53 um wiederaufladbare Speicherzellen 53.

Das Modulgehäuse 51 weist eine Handgriffpartie 54 zum Ergreifen durch einen Bediener und eine Energiespeicherpartie 55 auf, die im Wesentlichen die Speicherzellen 53 des Energiespeichers 52 aufnimmt. Die Speicherzellen 53 stehen jedoch noch partiell in die Handgriffpartie 54 vor. Die Energiespeicherpartie 55 ist zwischen der Handgriffpartie 54 und einem Steckvorsprung 61 der Gerätschnittstelle 60 vorgesehen.

Das Energiespeichermodul 50 ist mit der Energiespeicherpartie 55 und dem Steckvorsprung 61 in die Steckaufnahme 31 einsteckbar, nämlich entlang einer Steckachse S, so dass im angesteckten Zustand oder montierten Zustand des Energiespeichermoduls 50 lediglich dessen Handgriffpartie 54 vor das Gerätegehäuse 21 des Geräts 20 vorsteht. Im Wesentlichen ist also zumindest die relativ schwere Energiespeicherpartie 55 in der Steckaufnahme 31 aufgenommen, erfährt dort also einen optimalen Halt. Die Handgriffpartie 55 verlängert sozusagen das Gerätgehäuse 21 im Bereich von dessen Handgriffpartie 27 nach hinten, so dass eine vergrößerte Handballenauflage oder Handauflage für einen Bediener gegeben ist.

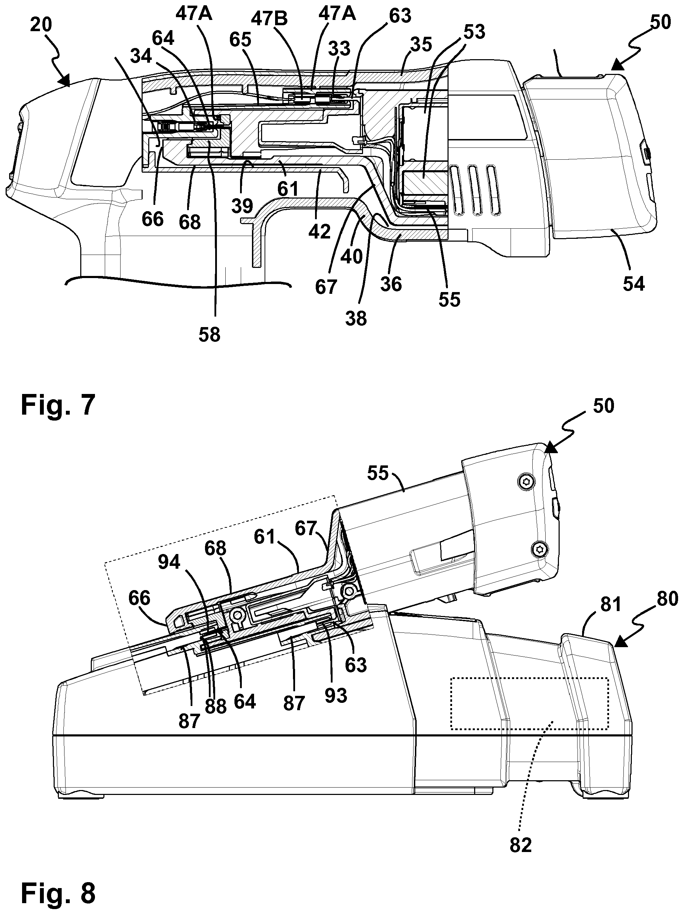

Der Steckvorsprung 61 ist in der Art einer relativ schmalen Kontaktzunge ausgestaltet, so dass er sich ohne weiteres in der Handgriffpartie 27 oder jedenfalls im Gerätegehäuse 21 bis in einen Bereich des Antriebsmotors 22 erstrecken kann, siehe Figur 7. In dem Steckvorsprung 61 sind keine Speicherzellen angeordnet, so dass er relativ schlank und kompakt ist und somit recht weit in Bezug auf die Steckachse in das Gerätegehäuse 21 eindringen kann. Dadurch erfährt das Energiespeichermodul 50 am Gerätegehäuse 21 bzw. Gerät 20 einen besonders festen Halt. Das Energiespeichermodul 50 ist also von einer langgestreckten Gestalt, wobei der Steckvorsprung 61 sein sozusagen schmalster Bereich oder derjenige Bereich mit kleinstem Außenumfang ist.

Demgegenüber hat die Energiespeicherpartie 55 zur Aufnahme der Speicherzellen 53 einen wesentlich größeren Außenumfang. Dort sind die entsprechend voluminösen Speicherzellen 53 angeordnet.

Die Außenumfangskonturen des Gerätegehäuses 21 sind an diese Ausgestaltung des Energiespeichermoduls 50 optimal angepasst. Die Steckaufnahme 31 weist nämlich eine im Querschnitt bzw. Außenumfang vergrößerte Partie 29, nahe bei einer Einstecköffnung 32 der Steckaufnahme 31 auf, während sozusagen weiter innen in der Steckaufnahme 31 bezüglich einer Steckrichtung SR, in der das Energiespeichermodul 50 in die Steckaufnahme 31 einsteckbar ist, eine Partie mit kleinerem Außenumfang, vorgesehen ist.

Das Gerätegehäuse 21 weist also in einem Bereich, wo der Steckvorsprung 61 an das Gerätegehäuse 21 in angestecktem Zustand des Energiespeichermoduls 50 zum Liegen kommt, vorteilhaft eine Taillierung 28 auf. Der Bediener kann die Handgriffpartie 27 des Gerätegehäuses 21 bequem ergreifen, wobei er beispielsweise mit Zeigefinger oder Mittelfinger den Schalter 24 bedienen kann und mit anderen Fingern, beispielsweise Ringfinger und kleinem Finger, um die Taillierung 28 zumindest partiell herumgreifen kann. Zugleich ruht seine Handfläche oder Handballenfläche auf der Oberseite der Handgriffpartie 27 bzw. des Gerätegehäuses 21 und kann sich dabei nicht nur auf dem Gerätegehäuse 21, sondern auch auf der Handgriffpartie 54 des Energiespeichermoduls 50 abstützen. Insgesamt ergibt sich also eine ergonomisch angenehme und günstige Konfiguration.

Zudem ist die Kontaktierung des Energiespeichermoduls 50 am Gerät 20 optimal gelöst. Der mechanische Halt des Energiespeichermoduls 50 am Gerät 20 ist zudem optimal, da das Energiespeichermodul 50 mit seinem größten Abschnitt in die Einsteckaufnahme 31 eintaucht, nämlich mit der Energiespeicherpartie 55 und dem Steckvorsprung 61, während die in Bezug auf die Steckachse S eine kleine Länge aufweisende Handgriffpartie 54 noch vor das Gerätegehäuse 21 vorsteht, aber nur geringe Kräfte oder Hebelkräfte aushalten muss.

An dem Steckvorsprung 61 sind Kontakte 63, 64 zur Herstellung einer elektrischen Verbindung oder Kontaktierung mit Gegenkontakten 33, 34 der Energiespeicherschnittstelle 30 des Geräts 20 angeordnet. Über die Kontakte 64 und Gegenkontakte 34 findet beispielsweise eine elektrische Energieübertragung zwischen dem Energiespeichermodul 50 und dem elektrischen Gerät 20 statt. Beispielsweise liegt am Kontakt 64A eine Versorgungsspannung (Gleichspannung) an, insbesondere von 15 V bis 18 V, während der Kontakt 64B sozusagen das Massepotential darstellt. Dementsprechend sind die Gegenkontakte 34A und 34B ein Potentialkontakt sowie ein Massekontakt. Diese Polaritäten und Spannungshöhen sind nur exemplarisch zu verstehen und können auch anders ausgestaltet sein, beispielsweise mit umgekehrter Polarität und/oder andere Spannungsverhältnissen.

Die Kontakte 63 umfassen beispielsweise drei voneinander verschiedene Kontakte 63A, 63B und 63C, die zur Kontaktierung mit Gegenkontakten 33A, 33B und 33C vorgesehen sind. Eine oder mehrere der Kontakte 63, 33 ist beispielsweise ein Datenkontakt, Buskontakt oder dergleichen. Mithin kann also das elektrische Gerät beispielsweise Steuerinformationen und /oder Abfrageinformationen über eine durch die Gegenkontakte 33 und Kontakte 63 bereitgestellte Datenschnittstelle kommunizieren.

An dieser Stelle sei nur der Vollständigkeit erwähnt, dass ein Energiespeichermodul gemäß der Erfindung, so auch das Energiespeichermodul 50, vorzugsweise einen oder mehrere Prozessoren an Bord hat, die mit einem oder mehreren Prozessoren der Steuerung 27 beispielsweise über die durch die Kontakte 33, 63 bereitgestellte Datenschnittstelle kommunizieren können.

Die Kontakte 63, 64 können auch dazu dienen, das Energiespeichermodul 50 wieder aufzuladen, nämlich anhand eines Ladegeräts 80. Das Ladegerät 80 weist ein Gerätegehäuse 81 auf, an dem eine Ladeschnittstelle 90 für das Energiespeichermodul 50 vorgesehen ist. Die Ladeschnittstelle 90 umfasst Gegenkontakte 93, insbesondere Gegenkontakte 93A, 93B und 93C, sowie Gegenkontakte 94, insbesondere Gegenkontakte 94A, 94B, die zur Kontaktierung mit den Kontakten 63, 64 des Energiespeichermoduls 50 ausgestattet und angeordnet sind. Die Gegenkontakte 93, 94 sind an einem Gerätegehäuse 81 des Ladegeräts 80 angeordnet. In dem Gerätegehäuse 81 ist zweckmäßigerweise ein elektrischer Energiewandler 82, beispielsweise ein Netzteil, angeordnet, der eine elektrische Versorgungsspannung in eine zum Laden des Energiespeichermoduls 50 geeignete Spannung umwandeln kann. Beispielsweise ist der Energiewandler 82 anhand eines Anschlusskabels 83 an ein Stromversorgungsnetz (nicht dargestellt) anschließbar, beispielsweise ein Wechselspannungsnetz von 110 V bis 240 V. Insbesondere vorteilhaft ist es, wenn der Energiewandler 82 für einen größeren Spannungsbereich ausgelegt und geeignet ist.

Die Steckaufnahme 31 des Geräts 20 weist eine Deckwand 35 auf, der eine Bodenwand 36 gegenüberliegt. Die Deckwand 35 und die Bodenwand 36 sind durch Seitenwände 37 miteinander verbunden, die sich zwischen den Wänden 35, 36 erstrecken. Die Steckaufnahme 31 hat einen zur Einführung der Energiespeicherpartie 55 des Energiespeichermoduls 50 vorgesehene Aufnahmepartie 38 sowie eine in Steckrichtung SR und somit weiter innen im Gerätegehäuse 21 liegende Partie 39, in der zur Aufnahme des Steckvorsprungs 61 vorgesehen ist. Der Steckvorsprung 61 bildet somit im Wesentlichen einen Befestigungsbereich 62 der Geräteschnittstelle 60. Am Steckvorsprung 61 befinden sich die Kontakte 63, 64, d.h. dass auch die entsprechenden Gegenkontakte 33, 34 im Bereich der Aufnahmepartie 39 angeordnet sind.

Zwischen der Aufnahmepartie 38 und der Aufnahmepartie 39 Ist eine Stufe 40 vorgesehen, an der sich die Steckaufnahme 31 sozusagen verengt. Mithin hat also die Aufnahmepartie 39 eine kleinere Querschnittsfläche entsprechend des relativ kleinen Querschnitts des Steckvorsprungs 61 im Vergleich zu der Energiespeicherpartie 55. Die Aufnahmepartie 39 erstreckt sich bis fast zum Schalter 24, jedenfalls bis in einen Bereich oberhalb oder neben dem Antriebsmotor 22, so dass das Energiespeichermodul 50 im an das Gerät 20 angestecktem Zustand tief in das Gerät 20 eintaucht und somit in Bezug auf die Steckachse S eine optimale Abstützung erfährt.

Die Kontakte 63, 64 sind an einem Seitenwandabschnitt 65 des Steckvorsprungs 61 angeordnet. Dabei sind die Kontakte 64A, 64B an einem freien Endbereich des Steckvorsprungs 61 angeordnet, jedoch hinter eine Stirnfläche oder Stirnseite 66 des Steckvorsprungs 61 in Steckrichtung SR sozusagen zurückversetzt. Somit bildet die Stirnfläche 66 in Steckrichtung SR sozusagen den vordersten Abschnitt des Energiespeichermoduls 50, wo jedoch keine Kontakte vorgesehen sind.

In dem Abstand zwischen der Stirnseite oder Stirnfläche 66 und den Kontakten 64A, 64B sind keine elektrischen kontaktierende Flächen, sondern elektrisch isolierenden Bereiche vorgesehen, beispielsweise eine Isolationsfläche 66B.

Die Kontakte 63 sind gegenüber den Kontakten 64 in Steckrichtung SR zurückversetzt und sind zudem in Bezug auf die Steckachse S in einem anderen Querabstand angeordnet. Die Kontakte 63 befinden sich im Bereich einer Stufe 67 zwischen dem Steckvorsprung 61 und der Energiespeicherpartie 55.

Der dem Seitenwandabschnitt 65 entgegengesetzt weist der Steckvorsprung 61 eine Stützwand 68 auf, die zur Abstützung an der Bodenwand 36 oder daran angeordneten Stützkonturen 41 vorgesehen sind. Somit ist der Steckvorsprung 61 quer zur Steckachse S in der Steckaufnahme 31 gestützt, wobei die Kontakte 63, 64 in Richtung der Kontakte 33, 34 ebenfalls eine Führung erfahren. Die Stützkonturen 41 werden beispielsweise durch eine Bodenwand 42 im Bereich der Aufnahmepartie 39 gebildet.

Weiterhin ist der Stützwandabschnitt 65 des Steckvorsprungs 61 an einer Stützwand 43 der Aufnahmepartie 39 abgestützt, die sich zwischen den Gegenkontakten 33, 34 im Bereich der Aufnahmepartie 39 erstreckt. Der Steckvorsprung 61 erfährt dort eine flächige Anlage, d.h. er ist sandwichartig zwischen die Bodenwand und die Stützwand 43 geklemmt oder dort jeweils abgestützt.

Eine seitliche Abstützung zur Steckachse S erfährt der Steckvorsprung 61 und mithin das Energiespeichermodul 50.

Die Bodenwand 42 und die Stützkonturen 41 bilden Steck-Gegen-Formschlusskonturen 44.

Zur Steckführung des Energiespeichermoduls 50 am Gerät 20 tragen ferner Führungskonturen 71 an dem Energiespeichermodul 50 bei, welche an Gegen-Führungskonturen 45 des Geräts 20 geführt sind. Die Gegen-Führungskonturen 45 umfassen beispielsweise eine Führungsrippe 46, welche in eine Führungsaufnahme 72 der Führungskonturen 71 am Steckvorsprung 61 eingreifen. Die Führungsrippen 46 sind an einander entgegengesetzten Seiten der Steckaufnahme 31 angeordnet. Beispielsweise stehen die Führungsrippen vor die Seitenwände 37 vor. Die Führungsaufnahmen 72 sind an Seitenwände 69 des Steckvorsprungs 61 vorgesehen. Die Führungsaufnahmen 72 erstrecken sich ebenso wie der Führungsvorsprung oder die Führungsrippe 46 parallel zur Steckachse S. Die Führungsaufnahme 72 ist zwischen Führungsvorsprüngen 73, 74 vorgesehen, die vor Seitenwände 69 des Steckvorsprungs 61 vorstehen. Die Führungsrippen 73 sind näher bei dem Seitenwandabschnitt 65 und die Führungsrippen 74 näher bei der Stützwand 68 angeordnet. Der langgestreckten Führungsvorsprünge 73, 74 sind an einer Seitenwand 69 und somit an einander entgegengesetzten Seiten des Steckvorsprungs 61 vorgesehen.

Ein weiterer formschlüssiger Halt bzw. eine Unterstützung des formschlüssigen Halts des Energiespeichermoduls 50 am Gerät 20 wird beispielsweise dadurch bereitgestellt, dass eine Innenkontur 49 der Einstecköffnung 32 einer Außenkontur 75 beispielsweise des Steckvorsprungs 61 und/oder der Energiespeicherpartie 55 angepasst ist. Beispielsweise hat die Energiespeicherpartie 55 eine Wölbungen aufweisende Außenkontur 75, die an die Außenkontur der Speicherzellen 53 angepasst ist. Diese Wölbungen sind an der Innenkontur 49 sozusagen abgebildet, so dass die Innenkontur 49 die Außenkontur 75 formschlüssig aufnehmen kann. Dabei kann der Formschluss erst dann hergestellt sein, wenn das Energiespeichermodul 50 quer zur Steckachse S eine Kraft erfährt, also belastet wird, während im unbelasteten Zustand die Außenkontur 75 an der Innenkontur 49 nicht oder nur partiell anliegt.

Eine weitere optimale Abstützung und Verkeilung wird beispielsweise durch eine Schrägfläche 57, insbesondere im Übergangsbereich zwischen der Energiespeicherpartie 55 und der Handgriffpartie 54, wo sich eine Stufe befindet, bereitgestellt. Die Schrägflächen 57 sind zweckmäßigerweise an einander entgegengesetzten Seiten der Energiespeicherpartie 55 vorgesehen, insbesondere etwa in einer Ebene, wo auch die Steck-Formschlusskonturen 70 vorhanden sind. Somit verkeilen sich die Schrägflächen 57 am Innenumfang, insbesondere der Innenkontur 49, der Steckaufnahme 31, wenn das Energiespeichermodul 50 in die Steckaufnahme 31 eingesteckt wird.

Ein formschlüssiger Halt in Bezug auf die Steckachse S, d.h. ein Halt, der ein Herausziehen des Energiespeichermoduls 50 aus der Steckaufnahme 31 behindert, wird durch Rastmittel 76 gewährleistet. Die Rastmittel 76 umfassen beispielsweise einen Rastvorsprung 78, der durch ein Betätigungselement 77 betätigbar ist. Der Rastvorsprung 78 ist in eine Raststellung eingefädelt, bei der er vor die Außenkontur 75 des Energiespeichermoduls 50 vorsteht und dann, wenn dieses in die Steckaufnahme 31 eingesteckt ist, eine Rastaufnahme 78 an der Steckaufnahme 31 hintergreift bzw. in die Rastaufnahme 78 eingreift. Beispielsweise ist die Rastaufnahme 48 an einer Stirnwand oder einem Stirnwandabschnitt vorgesehen, der vor die Deckwand 35 vorsteht. Das Betätigungselement 77, beispielsweise eine Drucktaste ist an der Handgriffpartie 54 vorgesehen, so dass es bequem zugänglich ist, wenn das Energiespeichermodul 50 in das Gerät 20 eingesteckt ist. Insbesondere ist das Betätigungselement 77 an einer in Gebrauchslage oberen Seite des Energiespeichermoduls 50 und des Geräts 20 angeordnet.

Die Gegenkontakte 33, 34 sind vorzugsweise als sogenannte Messerkontakte ausgestaltet und/oder weisen einander gegenüberliegende Kontaktzungen 47 auf. Zwischen die Kontaktzungen 47 greifen Kontaktzungen 79 der Kontakte 63, 64 ein. Beispielsweise ist die Konstruktion eine typische Konstruktion sogenannter Messerkontakte.

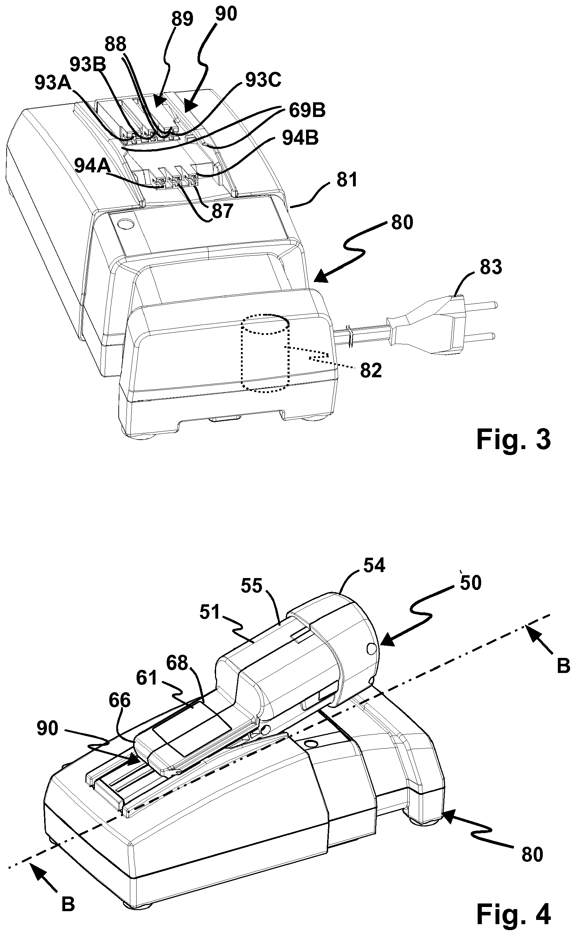

Das Energiespeichermodul 50 kann mit der Geräteschnittstelle 60 an einer Ladeschnittstelle 90 des Ladegeräts 80 montiert werden. Dort sind Gegenkontakte 93, 94 entsprechend den Gegenkontakten 33, 34 angeordnet, die jedenfalls mit den Kontakten 63, 64 der Geräteschnittstelle 60 des Energiespeichermoduls 50 in Kontakt treten können, wenn das Energiespeichermodul 50 an das Ladegerät 80 angeschlossen bzw. angesteckt ist (Figuren 4, 8).

Die Ladeschnittstelle 90 weist Führungsvorsprünge 68 auf, die an einander entgegengesetzten Seiten der Ladeschnittstelle 90 und einander gegenüberliegend angeordnet sind. Die Führungsvorsprünge 68 können in die Führungsaufnahmen 72 der Geräteschnittstelle 60 eingreifen. Zudem ist die Geräteschnittstelle 60 dadurch abgestützt und geführt, dass beispielsweise der Seitenwandabschnitt 65 an einer Stützfläche 85 der Ladeschnittstelle 90 abgestützt ist.

Zudem sind Kontaktzungen 88, welche die Gegenkontakte 93, 94 bilden und jeweils paarweise einander gegenüberliegend angeordnet sind, in Kontaktgehäusen 67 angeordnet. Die Kontaktgehäuse 67 haben eine langgestreckte, sich entlang der Längsachse oder Steckachse S erstreckende Gestalt und greifen in Kontaktaufnahmen 58 des Energiespeichermoduls 50 ein. In den Kontaktaufnahmen 58 sind die Kontaktzungen oder Kontaktflächen 79 der Kontakte 63, 64 eingehaust. Somit wird eine zusätzliche Steckführung erzielt, die jedenfalls eine Verrastung mit beispielsweise den Rastmitteln 67 nicht notwendig macht.

Die Führungsvorsprünge 68 bilden beispielsweise Steck-Gegen-Formschlusskonturen 89, die zu den Steck-Formschlusskonturen 70 des Energiespeichermoduls 50 formschlüssig passen.

Man erkennt, dass die Führungsrippe oder der Führungsvorsprung 73 und/oder die Führungsaufnahme 72 der Geräteschnittstelle 60 eine Hintergreif-Kontur 59 bilden, die beispielsweise anhand der Führungsrippen 46 oder Führungsvorsprünge 46 des Geräts 60 oder der Führungsvorsprünge 69, die insoweit Eingriffkonturen 46B, 69B bilden, hintergriffen werden können und somit einen Halt des Energiespeichermoduls 50 quer zur Steckachse S am Gerät 20 oder am Ladegerät 80 bereitstellen.

Das Energiespeichermodul 50 bildet ein Energiespeichermodul eines ersten Typs und kann prinzipiell auch an einem elektrischen Gerät 120 in Gestalt beispielsweise eines Schraubgeräts oder elektrischen Bohrgeräts angeschlossen werden und dieses mit elektrischem Strom versorgen. Das elektrische Gerät 120 ist beispielsweise ein Gerät eines zweiten Typs.

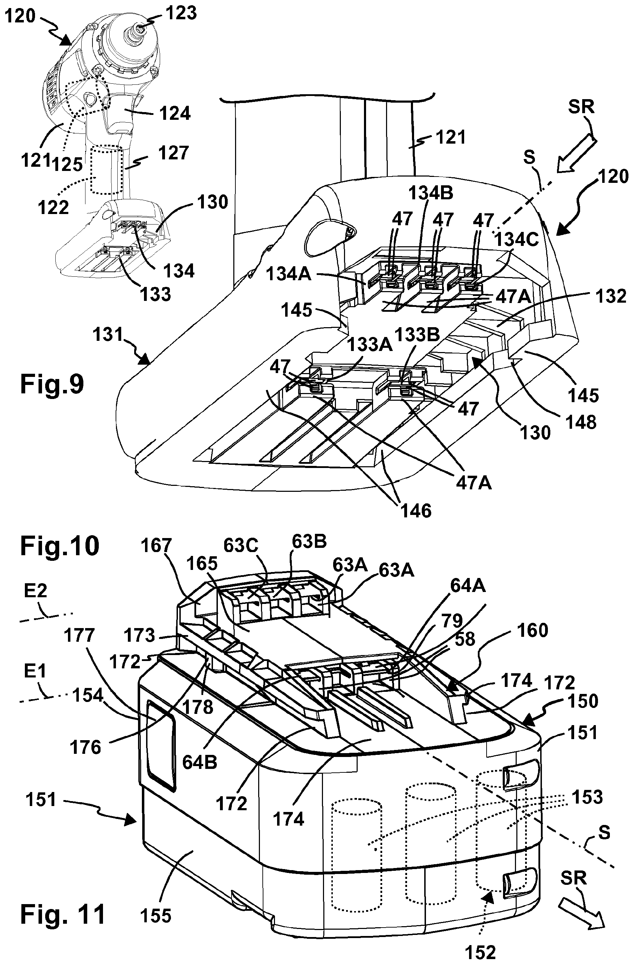

Allerdings wird typischerweise ein Energiespeichermodul 150, ein Akkupack, gemäß Figur 11 an der Maschine bzw. dem Gerät 120 verwendet. Das Energiespeichermodul 150 bildet ein Energiespeichermodul eines zweiten Typs und kann ebenso wie das Energiespeichermodul 50 an dem Ladegerät 80 aufgeladen werden, so dass der Nutzer nur ein einziges Ladegerät braucht, auch wenn er unterschiedliche Akku-Typen bzw. Energiespeichermodul-Typen einsetzt.

Die Maschine bzw. das Gerät 120 weist beispielsweise einen Antriebsmotor 122 auf, der in einem Gerätegehäuse 121 angeordnet ist. Der Antriebsmotor 122 kann durch eine Steuerung 125 angesteuert werden, beispielsweise durch Betätigung eines Schalters 124. Der Antriebsmotor 122 treibt eine Werkzeugaufnahme 123 an, an der ein Bohrwerkzeug, Bohrschraubwerkzeug oder dergleichen befestigt werden kann. Eine Handgriffpartie 127 weist an ihrem Fußbereich oder freien Endbereich eine Energiespeicherschnittstelle 130 auf, die zu einer Geräteschnittstelle 160 des Energiespeichermoduls 150 passt.

Die Energiespeicherschnittstelle 130 weist Gegenkontakte 133A, 133B sowie 134A, 134B und 134C auf, die zu Kontakten 64A, 64B sowie 63A, 63B und 63C des Energiespeichermoduls 150 passen. Um Ähnlichkeiten oder Identitäten deutlich zu machen, sind nachfolgend die Komponenten des Energiespeichermoduls 50 bzw. der Geräteschnittstelle 160 mit denselben Bezugszeichen oder mit um 100 vergrößerte Bezugszeichen versehen wie diejenigen des Energiespeichermoduls 50 und der Geräteschnittstelle 60. Auch bei der Energiespeicherschnittstelle 130 sind ähnliche Komponenten und Bestandteile wie bei der Energiespeicherschnittstelle 30 vorgesehen, weshalb gleiche Bezugszeichen oder um 100 vergrößerte Bezugszeichen nach Möglichkeit verwendet sind.

Beispielsweise sind die Gegenkontakte 133, 134 wiederum durch einander gegenüberliegende Kontaktzungen oder Kontaktflächen 47 gebildet, die in Kontaktgehäusen 47A aufgenommen sind. Einander gegenüberliegend weist die Energiespeicherschnittstelle 130 jeweils eine Gegen-Führungskontur 145 in Gestalt beispielsweise einer Führungsrippe auf, welche in Führungsaufnahmen 172 der Gerätschnittstelle 160 eingreifen. Die Führungsaufnahmen 172 sind beispielsweise zwischen einer Oberseite 174 des Modulgehäuses 151 des Energiespeichermoduls 50 und Führungsvorsprüngen 174 vorgesehen, die an L-förmigen, auskragenden Führungsrippenelementen vorhanden sind. Die Geräteschnittstelle 160 weist weiterhin einen Seitenwandabschnitt 165 entsprechend dem Seitenwandabschnitt 65 auf sowie eine Stufe 167, an der die Kontakte 63 angeordnet sind. Eine Ebene versetzt dazu, d.h. mit unterschiedlichem Querabstand zur Steckachse S, sind die Kontakte 64 vorgesehen, die sich also näher bei der oberen Wand oder Deckwand 174 befinden.

Das Energiespeichermodul 150 kann anhand von Rastmitteln 176 mit dem Gerät 120 verrastet werden. So sind beispielsweise an einander entgegengesetzten Seitenwänden des Energiespeichermoduls 150 bzw. Modulgehäuses 151 desselben Betätigungselemente 177, beispielsweise Tasten, vorgesehen, mit denen Rastvorsprünge 178, die in den Führungsaufnahmen 172 angeordnet sind, in eine Position verstellt werden können, in der sie außer Eingriff mit korrespondierenden Rastaufnahmen 148 der Energiespeicherschnittstelle 130 gelangen können. Die Rastaufnahmen 148 sind beispielsweise an den Gegen-Führungskonturen bzw. den Rippen oder Führungsvorsprüngen 146 vorgesehen, welche in die Führungsaufnahmen 172 eingreifen. Man erkennt also, dass das "Formschlusskonzept" oder "Steckkonzept" der Geräteschnittstelle 160 und 60 identisch ist, so dass wahlweise das Energiespeichermodul 50 oder Energiespeichermodul 150 an dem Ladegerät 80 und vorzugsweise auch an dem Gerät 20 befestigbar sind.

Bei den Geräteschnittstellen 60, 160 sind die jeweiligen Kontakte 63, 64 bzw. 163, 164 in bezüglich der Steckachse S unterschiedliche Querabstände aufweisenden Ebenen E1 und E2 angeordnet.

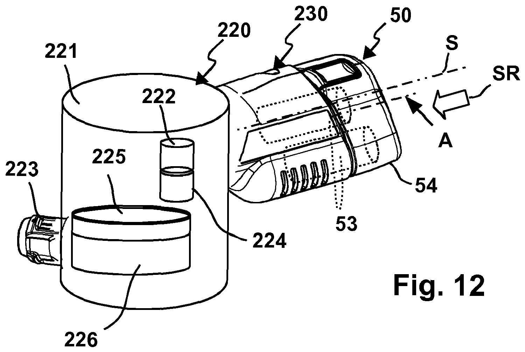

In Figur 12 ist schematisch angedeutet, dass das Energiespeichermodul 50 auch an einem Sauggerät 220 einsetzbar ist, welches eine der Energiespeicherschnittstelle 30 entsprechende Energiespeicherschnittstelle 230 aufweist. Das Sauggerät 220 weist beispielsweise einen elektrischen Antriebsmotor 222 zum Antreiben eines Saugaggregats 224 auf, welches einen Saugstrom erzeugen kann. An einen Anschluss 223 des Sauggeräts 220, der an einem Gerätegehäuse 221 des Sauggeräts 22 vorgesehen ist, kann ein Saugschlauch oder dergleichen angeschlossen werden. Der vom Saugaggregat 224 erzeugte Saugstrom strömt durch den Anschluss 223 in das Gerätegehäuse 221 ein, wobei in einem Schmutzsammelbehälter 226 Schmutz gesammelt und aus dem Saugstrom ausgesondert wird. Am Schmutzsammelbehälter 226 ist abströmseitig ein Filter 225 angeordnet. Das Sauggerät 220 ist beispielsweise ein sogenannter Werkstattsauger und kann insbesondere im Zusammenhang mit einem elektrischen Gerät eingesetzt werden, das als Hand-Werkzeugmaschine ausgestaltet ist, zum Beispiel dem Gerät 20.das Saugergehäuse oder Gerätegehäuse 221 kann auch als Koffer oder Stapelbehälter ausgestaltet sein.

## Patentansprüche

1. System umfassend
- ein Energiespeichermodul (50) eines ersten Typs zur Verwendung mit einem elektrischen Gerät (20) in Gestalt einer elektrischen Hand-Werkzeugmaschine oder eines Sauggeräts (220), wobei an einem Befestigungsbereich (62) eines Modulgehäuses (51) des Energiespeichermoduls (50) eine Geräteschnittstelle (60) mit Steck-Formschlusskonturen (70) zum Anstecken an Steck-Gegen-Formschlusskonturen (44) einer Energiespeicherschnittstelle (30) des elektrischen Geräts (20) entlang einer Steckachse (S) sowie elektrische Kontakte (63, 64) zur Kontaktierung mit elektrischen Gegenkontakten (33, 34) der Energiespeicherschnittstelle (30) des elektrischen Geräts (20) zu einer elektrischen Verbindung des Energiespeichermoduls (50) und des elektrischen Geräts (20) angeordnet sind, die bei einer Steckmontage der Geräteschnittstelle (60) an der Energiespeicherschnittstelle (30) in elektrischen Kontakt (63, 64) miteinander gelangen, wobei das Energiespeichermodul (50) mindestens einen in dem Modulgehäuse (51) aufgenommenen Energiespeicher (52), insbesondere eine Anordnung mit mindestens einer wiederaufladbaren elektrischen Speicherzelle (53), zur Bereitstellung elektrischer Energie an den Kontakten (63, 64) aufweist, wobei der Befestigungsbereich (62) an einem Steckvorsprung (61) zum Einstecken in eine Steckaufnahme (31) der Energiespeicherschnittstelle (30) des elektrischen Geräts (20) vorgesehen ist und die elektrischen Kontakte (63, 64) an einem sich entlang der Steckachse (S) erstreckenden Seitenwandabschnitt (65) des Steckvorsprungs (61) angeordnet sind, **dadurch gekennzeichnet, dass** es
- ein Energiespeichermodul (150) eines zweiten Typs aufweist, das einen Energiespeicher zur Bereitstellung elektrischer Energie an den Kontakten seiner Geräteschnittstelle (160), die der Geräteschnittstelle (60) des Energiespeichermoduls (50) des ersten Typs entspricht, sowie ein insbesondere kubisches Modulgehäuse (51) mit einer Seitenfläche aufweist, an der die Geräteschnittstelle (160) angeordnet ist, sodass das Energiespeichermodul (150) des zweiten Typs mit der Seitenfläche an ein elektrisches Gerät (20) seitlich ansteckbar ist und das Modulgehäuse (51) vor ein Gerätegehäuse (21) des elektrischen Geräts (20) mit seinem von der Seitenfläche abgewandten Abschnitt vorsteht.

2. System nach Anspruch 1, **dadurch gekennzeichnet, dass** bei dem Energiespeichermodul des ersten Typs vorgesehen ist, dass der Steckvorsprung (61) mindestens eine, insbesondere eine Planfläche aufweisende oder als Planfläche ausgestaltete, Stützwand (68) zum Abstützen an einer Stützkontur der Steckaufnahme (31) des elektrischen Geräts (20) aufweist, wobei die Stützwand (68) und der die elektrischen Kontakte (63, 64) aufweisende Seitenwandabschnitt (65) an einander entgegengesetzten Seiten des Steckvorsprungs (61) angeordnet sind, und/oder dass die elektrischen Kontakte (63, 64) an einer entlang der Steckachse (S), insbesondere parallel oder in einem flachen Winkel von maximal 5°, insbesondere maximal 3° oder 2°,zu der Steckachse (S), verlaufenden ersten Seite des Steckvorsprungs (61) angeordnet sind und an einer entlang der Steckachse (S), insbesondere parallel oder in einem flachen Winkel von maximal 5°, insbesondere maximal 3° oder 2°, zu der Steckachse (S), verlaufenden zweiten Seite des Steckvorsprungs (61), die zu der ersten Seite des Steckvorsprungs (61) winkelig und/oder von der ersten Seite des Steckvorsprungs (61) abgewandt ist, keine elektrischen Kontakte (63, 64) angeordnet sind.

3. System nach Anspruch 1 oder 2, **dadurch gekennzeichnet, dass** bei dem Energiespeichermodul des ersten Typs vorgesehen ist, dass die elektrischen Kontakte (63, 64) in mindestens zwei Ebenen (E1, E2) angeordnet sind, die unterschiedliche Querabstände zu der Steckachse (S) aufweisen und/oder dass die elektrischen Kontakte (63, 64) stufig angeordnet sind und/oder dass es mindestens zwei in Bezug auf die Steckachse (S) hintereinander angeordnete Kontakte (63, 64) aufweist, wobei vorteilhaft vorgesehen ist, dass in mindestens einer der Ebenen (E1, E2) zwei elektrische Kontakte (63, 64) in einem Querabstand zu der Steckachse (S) angeordnet sind und/oder dass die elektrischen Kontakte (63, 64) der mindestens zwei Ebenen in einer Steckrichtung (SR), entlang derer der Steckvorsprung (61) in die Steckaufnahme (31) einsteckbar ist, hintereinander angeordnet sind.

4. System nach einem der vorhergehenden Ansprüche, **dadurch gekennzeichnet, dass** bei dem Energiespeichermodul des ersten Typs vorgesehen ist, dass an dem Steckvorsprung (61) sich entlang der Steckachse (S) oder parallel zur Steckachse (S) erstreckende Führungskonturen (71), insbesondere Führungsrippen, zur Führung an Gegen-Führungskonturen (45) der Energiespeicherschnittstelle (30) des elektrischen Geräts (20) angeordnet sind.

5. System nach einem der vorhergehenden Ansprüche, **dadurch gekennzeichnet, dass** bei dem Energiespeichermodul des ersten Typs vorgesehen ist, dass in dem Steckvorsprung (61) keine Komponente, insbesondere keine elektrische Speicherzelle (53), des Energiespeichers (52) angeordnet ist.

6. System nach einem der vorhergehenden Ansprüche, **dadurch gekennzeichnet, dass** bei dem Energiespeichermodul des ersten Typs vorgesehen ist, dass der Steckvorsprung (61) als eine Steckzunge ausgestaltet ist und/oder der Steckvorsprung (61) eine kleinere von der Steckachse (S) durchsetzte Querschnittsfläche als ein Abschnitt, insbesondere eine Energiespeicherpartie (55), des Energiespeichermoduls (50) aufweist, vor welchen der Steckvorsprung (61) vorsteht.

7. System nach einem der vorhergehenden Ansprüche, **dadurch gekennzeichnet, dass** bei dem Energiespeichermodul des ersten Typs vorgesehen ist, dass es mindestens eine, insbesondere an dem Steckvorsprung (61) angeordnete und/oder sich parallel zur Steckachse (S) erstreckende und langgestreckte, Hintergreif-Kontur (59) zum Hintergreifen durch eine Eingriffkontur (46B, 69B) des elektrischen Geräts (20) oder eines Ladegeräts (80) für das Energiespeichermodul (50) aufweist, wobei vorteilhaft vorgesehen ist, dass die mindestens eine Hintergreif-Kontur (59) als eine Längsrippe ausgestaltet ist, die quer zur Steckachse (S) vor das Modulgehäuse (51), insbesondere den Steckvorsprung (61), vorsteht, oder als eine Längsausnehmung ausgestaltet ist, die sich quer zur Steckachse (S) in das Modulgehäuse (51), insbesondere den Steckvorsprung (61), hinein erstreckt.

8. System nach einem der vorhergehenden Ansprüche, **dadurch gekennzeichnet, dass** bei dem Energiespeichermodul des ersten Typs vorgesehen ist, dass es mindestens eine quer zur Steckachse (S) schräggeneigte Einführschräge (56) zum Einführen in die Steckaufnahme (31) und/oder mindestens eine quer zur Steckachse (S) schräggeneigte Schrägfläche (57), insbesondere Keilschräge, zur insbesondere keilartigen Abstützung an einer Stützkontur der Steckaufnahme (31) quer zu der Steckachse (S) aufweist und/oder dass es einen Rastvorsprung (78) und/oder eine Rastaufnahme zum Verrasten mit dem elektrischen Gerät (20) aufweist.

9. System nach einem der vorhergehenden Ansprüche, **dadurch gekennzeichnet, dass** bei dem Energiespeichermodul des ersten Typs vorgesehen ist, dass an einer Stirnseite oder Stirnfläche (66) des Steckvorsprungs (61) kein elektrischer Kontakt angeordnet ist und/oder dass die elektrischen Kontakte (63, 64) in Bezug auf eine Steckrichtung (SR), entlang derer das Energiespeichermodul (50) in die Steckaufnahme (31) des elektrischen Geräts (20) einsteckbar ist, hinter einer in Steckrichtung (SR) vorn liegenden Stirnfläche (66) oder Stirnseite des Steckvorsprungs (61) angeordnet sind, und/oder dass die elektrischen Kontakte einen Längsabstand bezüglich der Steckrichtung (SR) oder der Steckachse (S) bezüglich einer freien und/oder in Steckrichtung (SR) vorn liegenden Stirnfläche (66) oder Stirnseite des Steckvorsprungs (61) aufweisen, wobei in dem Längsabstand vorteilhaft mindestens eine Isolationsfläche angeordnet ist.

10. System nach einem der vorhergehenden Ansprüche, **dadurch gekennzeichnet, dass** das Modulgehäuse (51) des Energiespeichermoduls des zweiten Typs vor das Gerätegehäuse (21) des elektrischen Geräts (20) mit seinem von der Seitenfläche abgewandten Abschnitt mit mindestens 80 % oder 90 % seines Volumens und/oder im Wesentlichen vollständig vorsteht.

11. System nach einem der vorhergehenden Ansprüche, **dadurch gekennzeichnet, dass** es ein Ladegerät (80) zum Aufladen des Energiespeichermoduls des ersten Typs und des zweiten Typs aufweist.

12. System nach Anspruch 11, **dadurch gekennzeichnet, dass** das Ladegerät (80) eine Ladeschnittstelle (90) aufweist, an welche die Geräteschnittstellen (60, 160) des Energiespeichermoduls (50) des ersten Typs und des Energiespeichermoduls (150) des zweiten Typs passen.

13. System nach einem der vorhergehenden Ansprüche, **dadurch gekennzeichnet, dass** es ein elektrisches Gerät (20) in Gestalt einer elektrischen Hand-Werkzeugmaschine oder eines Sauggeräts (220) mit einem Gerätegehäuse (21) und mit einer Energiespeicherschnittstelle (30) für das Energiespeichermodul (50) ersten Typs umfasst, wobei die Energiespeicherschnittstelle (30) Steck-Gegen-Formschlusskonturen (44) zum Anstecken von Steck-Formschlusskonturen (70) einer Geräteschnittstelle (60) des Energiespeichermoduls (50) und elektrische Gegenkontakten (33, 34) für Kontakte (63, 64) des Energiespeichermoduls (50) für eine elektrische Verbindung des Energiespeichermoduls (50) und des elektrischen Geräts (20) aufweist, wobei die Kontakte (63, 64) und die Gegen-Kontakte bei einer Steckmontage der Geräteschnittstelle (60) an der Energiespeicherschnittstelle (30) in elektrischen Kontakt miteinander gelangen, wobei die Energiespeicherschnittstelle (30) als eine Steckaufnahme (31) zum Einstecken eines Steckvorsprungs (61) der Geräteschnittstelle (60) des Energiespeichermoduls (50) ausgestaltet ist, und dass die Gegenkontakte (33, 34) an einer an einem sich entlang der Steckachse (S) erstreckenden Seitenwandabschnitt (65) der Steckaufnahme (31) angeordnet sind und/oder das Gerätegehäuse (21) im Bereich der Steckaufnahme (31) eine insbesondere zum Umgreifen geeignete Taillierung (28) aufweist.

14. System nach Anspruch 13, **dadurch gekennzeichnet, dass** das Gerätegehäuse (21) des elektrischen Geräts (20) im Bereich einer Einstecköffnung (32) der Steckaufnahme (31) eine Partie (29) mit einem größeren Außenumfang zur Aufnahme einer Energiespeicherpartie (55) des Energiespeichermoduls (50), in welcher ein Energiespeicher, insbesondere eine Anordnung mit mindestens einer wiederaufladbaren elektrischen Speicherzelle (53), aufgenommen ist, und eine Partie mit einem kleineren Außenumfang zur Aufnahme des Steckvorsprungs (61) des Energiespeichermoduls (50) auf.

15. System nach Anspruch 13 oder 14, **dadurch gekennzeichnet, dass** die Gegen-Kontakte des elektrischen Geräts (20) insbesondere ausschließlich im Bereich der Taillierung des Gerätegehäuses (21) angeordnet sind.

## Claims

1. System comprising
- an energy storage module (50) of a first type for use with an electrical device (20) in the form of an electrical hand-operated power tool or a suction unit (220) wherein, on a mounting area (62) of a module casing (51) of the energy storage module (50), there are provided a device interface (60) with plug-in interlocking contours (70) for attaching to plug-in mating interlocking contours (44) of an energy storage interface (30) of the electrical device (20) along an insertion axis (S), together with electrical contacts (63, 64) for making contact with electrical mating contacts (33, 34) of the energy storage interface (30) of the electrical device (20) to create an electrical connection of the energy storage module (50) and the electrical device (20), which make electrical contact (63, 64) with one another during plug-in fitting of the device interface (60) to the energy storage interface (30), wherein the energy storage module (50) has at least one energy store (52) mounted in the module casing (51), in particular an assembly with at least one rechargeable electrical storage cell (53), for the provision of electrical power at the contacts (63, 64), wherein the mounting area (62) is provided at a plug-in projection (61) for insertion in a plug-in socket (31) of the energy storage interface (30) of the electrical device (20), and the electrical contacts (63, 64) are arranged on a side wall section (65) of the plug-in projection (61) extending along the insertion axis (S), **characterised in that** has
- an energy storage module (150) of a second type, which has an energy store for the provision of electrical power to the contacts of its device interface (160), which corresponds to the device interface (60) of the energy storage module (50) of the first type, together with a module casing (51), in particular cubic, with a side face on which the fixing device (160) is provided, so that the energy storage module (150) of the second type may be attached with the side face to the side of an electrical device (20), and the module casing (51) protrudes from a device casing (21) of the electrical device (20) with a section facing away from the sie face.

2. System according to claim 1, **characterised in that** it is provided, for the energy storage module of the first type, that the plug-in projection (61) has at least one support wall (68), in particular with a plane surface or designed as a flat surface, for support on a support contour of the plug-in socket (31), wherein the support wall (68) and the side wall section (65) with the electrical contacts (63, 64) are arranged on opposite sides of the plug-in projection (61), and/or that the electrical contacts (63, 64) are arranged on a first side of the plug-in projection (61) running along the insertion axis (S), in particular parallel or at a flat angle of maximum 5°, in particular a maximum of 3° or 2°, to the insertion axis (S), and no electrical contacts (63, 64) are provided on a second side of the plug-in projection (61) running along the insertion axis (S), in particular parallel or at a flat angle of maximum 5°, in particular a maximum of 3° or 2°, to the insertion axis (S), which is arranged at an angle to the first side of the plug-in projection (61) and/or faces away from the first side of the plug-in projection (61).

3. System according to claim 1 or 2, **characterised in that** it is provided, for the energy storage module of the first type, that the electrical contacts (63, 64) are arranged on at least two levels (E1, E2), which have different lateral clearances from the insertion axis (S), and/or that the electrical contacts (63, 64) are stepped, and/or that it has at least two contacts (63, 64) arranged one behind the other in respect of the insertion axis (S), wherein it is provided advantageously that on at least one of the levels (E1, E2), two electrical contacts (63, 64) are arranged with lateral clearance from the insertion axis (S) and/or that the electrical contacts (63, 64) of the two or more levels are arranged consecutively in a direction of insertion (SR) along which the plug-in projection (61) may be plugged into the plug-in socket (31).

4. System **characterised in that** any of the preceding claims, **characterised in that** it is provided, for the energy storage module of the first type, that on the plug-in projection (61) there are provided, extending along the insertion axis (S) or parallel to the insertion axis (S), guide contours (71), in particular guide ribs, for guidance on mating guide contours (45) of the energy storage interface (30) of the electrical device (20).

5. System **characterised in that** any of the preceding claims, **characterised in that** it is provided, for the energy storage module of the first type, that no component, in particular no electrical storage cell (53), of the energy store (52) is mounted in the plug-in projection (61).

6. System **characterised in that** any of the preceding claims, **characterised in that** it is provided, for the energy storage module of the first type, that the plug-in projection (61) is in the form of a plug-in tongue, and/or the plug-in projection (61) has a smaller cross-sectional surface through which the insertion axis (S) passes than a section, in particular an energy storage section (55) of the energy storage module (50), from which the plug-in projection (61) protrudes.

7. System **characterised in that** any of the preceding claims, **characterised in that** it is provided, for the energy storage module of the first type, that it has at least one elongated rear-engaging contour (59), in particular provided on the plug-in projection (61) and/or extending parallel to the insertion axis (S), for rear engagement by an engaging contour (46B, 69B) of the electrical device (20) or a charger (80) for the energy storage module (50), wherein it is advantageously provided that the rear-engaging contour or contours (59) is or are in the form of a longitudinal rib which protrudes from the module casing (51), in particular the plug-in projection (61), transversely to the insertion axis (S), or is in the form of a longitudinal recess, which extends into the module casing (51), in particular the plug-in projection (61), transversely to the insertion axis (S).

8. System **characterised in that** any of the preceding claims, **characterised in that** it is provided, for the energy storage module of the first type, that it has at least one insertion bevel (56), obliquely-angled transversely to the insertion axis (S), and/or at least one inclined surface (57), in particular a wedge bevel, obliquely-angled transversely to the insertion axis (S), for support, in particular wedge-like, on a support contour of the plug-in socket (31) transversely to the insertion axis (S), and/or that it has a latching projection (78) and/or a latching location for engagement with the electrical device (20).

9. System **characterised in that** any of the preceding claims, **characterised in that** it is provided, for the energy storage module of the first type, that no electrical contact is provided on an end face or front surface (66) of the plug-in projection (61), and/or that the electrical contacts (63, 64), in respect of a direction of insertion (SR) along which the energy storage module (50) may be plugged into the plug-in socket (31) of the electrical device (20), are arranged behind a front surface (66) or end face of the plug-in projection (61) lying forwards in the direction of insertion (SR), and/or that the electrical contacts have a longitudinal clearance with respect to the direction of insertion (SR) or the insertion axis (S) relative to a a front surface (66) or end face of the plug-in projection (61) which lies free and or forwards in the direction of insertion (SR), wherein the longitudinal clearance advantageously includes an insulating surface.

10. System according to any of the preceding claims, **characterised in that** the module casing (51) of the energy storage module of the second type protrudes from the device casing (21) of the electrical device (20) with its section which faces away from the side face by at least 80% or 90% of its volume and/or substantially completely.

11. System according to any of the preceding claims, **characterised in that** it has a charger (80) for charging up the energy storage module of the first type and the second type.

12. System according to claim 11, **characterised in that** the charger (80) has a charging interface (90), to which the device interfaces (60, 160) of the energy storage module (50) of the first type and the energy storage module (150) of the second type are matched.

13. System according to any of the preceding claims, **characterised in that** it comprises an electrical device (20) in the form of an electrical hand-operated power tool or a suction unit (220) with a device casing (21) and with an energy storage interface (30) for the energy storage module (50) of the first type, wherein the energy storage interface (30) has plug-in mating interlocking contours (44) for attaching plug-in interlocking contours (70) of a device interface (60) of the energy storage module (50), and electrical mating contacts (33, 34) for contacts (63, 64) of the energy storage module (50) for electrical connection of the energy storage module (50) and the electrical device (20), wherein the contacts (63, 64) and the mating contacts, during plug-in fitting of the device interface (60) to the energy storage interface (30), make electrical contact with one another, wherein the energy storage interface (30) is designed as a plug-in socket (31) for insertion of the plug-in projection (61) of the device interface (60) of the energy storage module (50), and that the mating contacts (33, 34) are arranged on a side wall section (65) of the plug-in socket (31) extending along the insertion axis (S) and/or the device casing (21) has in the area of the plug-in socket (31) a narrowing suitable in particular for being encompassed.

14. System according to claim 13, **characterised in that** the device casing (21) of the electrical device (20) has in the area of an insertion opening (32) of the plug-in socket (31) a section (29) with a larger outer periphery to accommodate an energy storage section (55) of the energy storage module (50) in which an energy store, in particular an arrangement with at least one rechargeable electrical storage cell (53), is held, and a section with a smaller outer periphery to accommodate the plug-in projection (61) of the energy storage module (50).

15. System according to claim 13 or 14, **characterised in that** the mating contacts of the electrical device (20) are located solely in the area of the narrowing of the device casing (21).

## Revendications

1. Système comprenant
- un module d'accumulateur d'énergie (50) d'un premier type destiné à être utilisé avec un appareil électrique (20) sous la forme d'une machine-outil portative électrique ou d'un appareil d'aspiration (220), dans lequel une interface d'appareil (60) avec des contours de complémentarité de formes enfichables (70) destinés à être enfichés dans des contours de complémentarité de formes enfichables complémentaires (44) d'une interface d'accumulateur d'énergie (30) de l'appareil électrique (20) le long d'un axe d'enfichage (S) ainsi que des contacts électriques (63, 64) pour une mise en contact avec des contacts complémentaires électriques (33, 34) de l'interface d'accumulateur d'énergie (30) de l'appareil électrique (20) aux fins d'une liaison électrique du module d'accumulateur d'énergie (50) et de l'appareil électrique (20), qui, lors d'un montage d'enfichage de l'interface d'appareil (60) au niveau de l'interface d'accumulateur d'énergie (30), parviennent en contact électrique (63, 64) les uns avec les autres, sont disposés au niveau d'une zone de fixation (62) d'un boîtier de module (51) du module d'accumulateur d'énergie (50), dans lequel le module d'accumulateur d'énergie (50) présente au moins un accumulateur d'énergie (52) logé dans le boîtier de module (51), en particulier un ensemble avec au moins un élément accumulateur électrique (53) rechargeable, destiné à fournir de l'énergie électrique aux contacts (63, 64), dans lequel la zone de fixation (62) est prévue au niveau d'une partie saillante enfichable (61) destinée à être enfichée dans un logement d'enfichage (31) de l'interface d'accumulateur d'énergie (30) de l'appareil électrique (20) et les contacts électriques (63, 64) sont disposés au niveau d'une section de paroi latérale (65), s'étendant le long de l'axe d'enfichage (S), de la partie saillante enfichable (61), **caractérisé en ce qu'**il
- présente un module d'accumulateur d'énergie (150) d'un deuxième type, qui présente un accumulateur d'énergie destiné à fournir de l'énergie électrique aux contacts de son interface d'appareil (160), qui correspond à l'interface d'appareil (60) du module d'accumulateur d'énergie (50) du premier type, ainsi qu'un boîtier de module (51) en particulier cubique avec une surface latérale, au niveau de laquelle l'interface d'appareil (160) est disposée, de sorte que le module d'accumulateur d'énergie (150) du deuxième type avec la surface latérale puisse être enfiché latéralement dans un appareil électrique (20) et le boîtier de module (51) fasse saillie devant un boîtier d'appareil (21) de l'appareil électrique (20) avec sa section opposée à la surface latérale.

2. Système selon la revendication 1, **caractérisé en ce que**, pour le module d'accumulateur d'énergie du premier type, il est prévu que la partie saillante enfichable (61) présente au moins une paroi d'appui (68), présentant en particulier une surface plane ou réalisée en tant que surface plane, destinée à être en appui contre un contour d'appui du logement d'enfichage (31) de l'appareil électrique (20), dans lequel la paroi d'appui (68) et la section de paroi latérale (65) présentant les contacts électriques (63, 64) sont disposées au niveau de faces opposées l'une à l'autre de la partie saillante enfichable (61), et/ou que les contacts électriques (63, 64) soient disposés au niveau d'une première face de la partie saillante enfichable (61) s'étendant le long de l'axe d'enfichage (S), en particulier parallèlement ou selon un angle plat de maximum 5°, en particulier de maximum 3° ou 2°, par rapport à l'axe d'enfichage (S) et aucun contact électrique (63, 64) ne soit disposé au niveau d'une deuxième face de la partie saillante enfichable (61) s'étendant le long de l'axe d'enfichage (S), en particulier parallèlement ou selon un angle plat de maximum 5°, en particulier de maximum 3° ou 2°, par rapport à l'axe d'enfichage (S), qui est angulaire par rapport à la première face de la partie saillante enfichable (61) et/ou est opposée à la première face de la partie saillante enfichable (61).

3. Système selon la revendication 1 ou 2, **caractérisé en ce que**, pour le module d'accumulateur d'énergie du premier type, il est prévu que les contacts électriques (63, 64) soient disposés dans au moins deux plans (E1, E2), qui présentent des distances transversales différentes par rapport à l'axe d'enfichage (S) et/ou que les contacts électriques (63, 64) soient disposés de manière étagée et/ou qu'il présente au moins deux contacts (63, 64) disposés l'un derrière l'autre par rapport à l'axe d'enfichage (S), dans lequel il est prévu de manière avantageuse que deux contacts électriques (63, 64) soient disposés dans une distance transversale par rapport à l'axe d'enfichage (S) dans au moins un des plans (E1, E2) et/ou que les contacts électriques (63, 64) des au moins deux plans soient disposés l'un derrière l'autre dans une direction d'enfichage (SR), le long de laquelle la partie saillante enfichable (61) peut être enfichée dans le logement d'enfichage (31).

4. Système selon l'une quelconque des revendications précédentes, **caractérisé en ce que**, pour le module d'accumulateur d'énergie du premier type, il est prévu que des contours de guidage (71) s'étendant le long de l'axe d'enfichage (S) ou parallèlement à l'axe d'enfichage (S), en particulier des nervures de guidage, destinés à être guidés au niveau de contours de guidage complémentaires (45) de l'interface d'accumulateur d'énergie (30) de l'appareil électrique (20), soient disposés au niveau de la partie saillante enfichable (61).

5. Système selon l'une quelconque des revendications précédentes, **caractérisé en ce que**, pour le module d'accumulateur d'énergie du premier type, il est prévu qu'aucun composant, en particulier aucun élément accumulateur électrique (53), de l'accumulateur d'énergie (52) ne soit disposé dans la partie saillante enfichable (61).

6. Système selon l'une quelconque des revendications précédentes, **caractérisé en ce que**, pour le module d'accumulateur d'énergie du premier type, il est prévu que la partie saillante enfichable (61) soit réalisée en tant qu'une languette enfichable et/ou que la partie saillante enfichable (61) présente une plus petite surface de section transversale traversée par l'axe d'enfichage (S) qu'une section, en particulier une section d'accumulateur d'énergie (55), du module d'accumulateur d'énergie (50), devant laquelle la partie saillante enfichable (61) fait saillie.

7. Système selon l'une quelconque des revendications précédentes, **caractérisé en ce que**, pour le module d'accumulateur d'énergie du premier type, il est prévu qu'il présente au moins un contour d'enserrement par l'arrière (59) disposé en particulier au niveau de la partie saillante enfichable (61) et/ou s'étendant parallèlement à l'axe d'enfichage (S) et allongé, destiné à être enserré par l'arrière par un contour de mise en prise (46B, 69B) de l'appareil électrique (20) ou d'un appareil de charge (80) pour le module d'accumulateur d'énergie (50), dans lequel il est prévu de manière avantageuse que l'au moins un contour d'enserrement par l'arrière (59) soit réalisé en tant qu'une nervure longitudinale, qui fait saillie transversalement à l'axe d'enfichage (S) devant le boîtier de module (51), en particulier la partie saillante enfichable (61), ou soit réalisé en tant qu'un évidement longitudinal, qui s'étend transversalement à l'axe d'enfichage (S) à l'intérieur du boîtier de module (51), en particulier la partie saillante enfichable (61).

8. Système selon l'une quelconque des revendications précédentes, **caractérisé en ce que**, pour le module d'accumulateur d'énergie du premier type, il est prévu qu'il présente au moins un chanfrein d'introduction (56) incliné transversalement à l'axe d'enfichage (S), destiné à être introduit dans le logement d'enfichage (31) et/ou au moins une surface oblique (57) inclinée transversalement à l'axe d'enfichage (S), en particulier un chanfrein de clavette, destiné à être en appui à la façon d'une clavette contre un contour d'appui du logement d'enfichage (31) transversalement à l'axe d'enfichage (S) et/ou qu'il présente une partie saillante d'encliquetage (78) et/ou un logement d'encliquetage destiné à s'encliqueter avec l'appareil électrique (20).

9. Système selon l'une quelconque des revendications précédentes, **caractérisé en ce que**, pour le module d'accumulateur d'énergie du premier type, il est prévu qu'aucun contact électrique ne soit disposé au niveau d'une face frontale ou surface frontale (66) de la partie saillante enfichable (61) et/ou que les contacts électriques (63, 64) soient disposés par rapport à une direction d'enfichage (SR) le long de laquelle le module d'accumulateur d'énergie (50) peut être enfiché dans le logement d'enfichage (31) de l'appareil électrique (20), derrière une surface frontale (66), située à l'avant dans la direction d'enfichage (SR), ou face frontale de la partie saillante enfichable (61), et/ou que les contacts électriques présentent une distance longitudinale par rapport à la direction d'enfichage (SR) ou l'axe d'enfichage (S) par rapport à une surface frontale (66) ou face frontale de la partie saillante enfichable (61) libre et/ou située à l'avant dans la direction d'enfichage (SR), dans lequel au moins une surface d'isolation est disposée avantageusement dans la distance longitudinale.

10. Système selon l'une quelconque des revendications précédentes, **caractérisé en ce que** le boîtier de module (51) du module d'accumulateur d'énergie du deuxième type fait saillie avec au moins 80 % ou 90 % de son volume et/ou de manière sensiblement complète devant le boîtier d'appareil (21) de l'appareil électrique (20) avec sa section opposée à la surface latérale.

11. Système selon l'une quelconque des revendications précédentes, **caractérisé en ce qu'**il présente un appareil de charge (80) destiné à charger le module d'accumulateur d'énergie du premier type et du deuxième type.

12. Système selon la revendication 11, **caractérisé en ce que** l'appareil de charge (80) présente une interface de charge (90) à laquelle les interfaces d'appareil (60, 160) du module d'accumulateur d'énergie (50) du premier type et du module d'accumulateur d'énergie (150) du deuxième type s'adaptent.

13. Système selon l'une quelconque des revendications précédentes, **caractérisé en ce qu'**il comprend un appareil électrique (20) sous la forme d'une machine-outil portative électrique ou d'un appareil d'aspiration (220) avec un boîtier d'appareil (21) et avec une interface d'accumulateur d'énergie (30) pour le module d'accumulateur d'énergie (50) de premier type, dans lequel l'interface d'accumulateur d'énergie (30) présente des contours de complémentarité de formes enfichables complémentaires (44) pour l'enfichage de contours de complémentarité de formes enfichables (70) d'une interface d'appareil (60) du module d'accumulateur d'énergie (50) et des contacts complémentaires électriques (33, 34) pour des contacts (63, 64) du module d'accumulateur d'énergie (50) pour une liaison électrique du module d'accumulateur d'énergie (50) et de l'appareil électrique (20), dans lequel les contacts (63, 64) et les contacts complémentaires parviennent en contact électrique les uns avec les autres lors d'un montage d'enfichage de l'interface d'appareil (60) au niveau de l'interface d'accumulateur d'énergie (30), dans lequel l'interface d'accumulateur d'énergie (30) est réalisée en tant qu'un logement d'enfichage (31) pour l'enfichage d'une partie saillante enfichable (61) de l'interface d'appareil (60) du module d'accumulateur d'énergie (50), et que les contacts complémentaires (33, 34) sont disposés au niveau d'une section de paroi latérale (65), s'étendant le long de l'axe d'enfichage (S), du logement d'enfichage (31) et/ou le boîtier d'appareil (21) présente dans la zone du logement d'enfichage (31) un cintrage (28) en particulier adapté à être enserré.

14. Système selon la revendication 13, **caractérisé en ce que** le boîtier d'appareil (21) de l'appareil électrique (20) présente, dans la zone d'une ouverture d'enfichage (32) du logement d'enfichage (31), une partie (29) avec une périphérie extérieure plus grande destinée à loger une partie d'accumulateur d'énergie (55) du module d'accumulateur d'énergie (50), dans laquelle est logé un accumulateur d'énergie, en particulier un ensemble avec au moins un élément accumulateur électrique (53) rechargeable, et une partie avec une périphérie extérieure plus petite destinée à loger la partie saillante enfichable (61) du module d'accumulateur d'énergie (50).

15. Système selon la revendication 13 ou 14, **caractérisé en ce que** les contacts complémentaires de l'appareil électrique (20) sont disposés en particulier exclusivement dans la zone du cintrage du boîtier d'appareil (21).
